(19) Europäisches Patentamt
European Patent Office
Office européen des brevets

(11) EP 4 516 947 A1

(12) **EUROPEAN PATENT APPLICATION**

(43) Date of publication:
05.03.2025 Bulletin 2025/10

(21) Application number: 23207658.8

(22) Date of filing: 03.11.2023

(51) International Patent Classification (IPC):
C22B 5/04 (2006.01)    B09B 3/70 (2022.01)
C01B 33/20 (2006.01)    C22B 7/00 (2006.01)
C22B 7/04 (2006.01)    F23G 5/44 (2006.01)
G06F 17/16 (2006.01)

(52) Cooperative Patent Classification (CPC):
C22B 7/04; B09B 3/70; C01B 33/20; C22B 5/04;
C22B 7/001; Y02P 10/20

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.09.2023 CN 202311126109

(71) Applicant: **University Of Science And Technology Beijing**
**Beijing 100083 (CN)**

(72) Inventors:
• **ZHANG, Shengen**
**Beijing, 100083 (CN)**
• **SHEN, Hanlin**
**Beijing, 100083 (CN)**
• **LIU, Bo**
**Beijing, 100083 (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(54) **MULTI-SOURCE SOLID WASTE RECYCLING METHOD BASED ON COMPOSITION DESIGN FOR CALCIUM-SILICON-ALUMINIUM-MAGNESIUM OXIDE**

(57) The present invention discloses a multi-source solid waste recycling method based on composition design for calcium-silicon-aluminium-magnesium oxide, and belongs to the field of solid waste recycling. The present invention collects multi-source solid waste composition data; calculates and designs compositions of calcium oxide, silicon oxide, aluminium oxide and magnesium oxide units to obtain an inorganic non-metallic raw material with a target composition; and melts the raw material into slag, and uses carbon, metallic aluminium, aluminium nitride, aluminium carbide, silicon nitride and silicon carbide in the multi-source solid waste as reducing agents, wherein the slag provides a high-temperature homogeneous reaction environment and serves as a "solvent" for reactants, the reducing agents reduce valuable metals in the slag to obtain an alloy, thereby achieving recovery of the valuable metals, and the slag is used for the inorganic non-metallic material in a high-value mode. The present invention achieves the synergistic recycling of the multi-source solid waste on the alloy and the inorganic non-metallic material by pyrometallurgy, and has the advantages of a short flow, a wide application range, strong operability and easy industrialization.

FIG. 1

**Description**

**TECHNICAL FIELD**

The present invention relates to the field of solid waste recycling, and in particular, to a multi-source solid waste recycling method based on composition design for calcium-silicon-aluminium-magnesium oxide.

**BACKGROUND**

With the development of industry and improvement of living standards, the amount of the solid wastes increases year by year. Since no reasonable disposal method is available, the solid wastes are mainly piled up and landfilled at present. However, a solid waste is a misplaced resource, and contains a large amount of inorganic non-metallic materials such as calcium oxide, silicon dioxide, aluminium oxide and magnesium oxide, and valuable metallic elements such as vanadium, chromium, manganese, iron, cobalt, nickel, copper, zinc, molybdenum, cadmium, tin and lead. If the solid wastes can be converted into inorganic non-metallic materials, the environmental pressure caused by the solid wastes can be effectively relieved, and the consumption of the traditional inorganic non-metallic raw materials is reduced.

The inorganic non-metallic material is mainly prepared by designing content of calcium oxide, silicon dioxide, aluminium oxide and magnesium oxide, and exists in the forms of silicate, aluminate, aluminosilicate, magnesioaluminate, and the like. The silicate includes tricalcium silicate ($Ca_3SiO_5$), dicalcium silicate ($Ca_2SiO_4$), wollastonite ($CaSiO_3$), rankinite ($Ca_3Si_2O_7$), asbestos ($CaMg_3Si_4O_{12}$), olivine ($Mg_2SiO_4$) and the like; the aluminate includes dodecacalcium heptaluminate ($Ca_{12}Al_{14}O_{33}$), tricalcium aluminate ($Ca_3Al_2O_6$), calcium aluminate ($CaAl_2O_4$), calcium dialuminate ($CaAl_4O_7$) and the like; the aluminosilicate includes gehlenite ($Ca_2Al_2SiO_7$), anorthite ($CaAl_2Si_2O_8$), mullite ($Al_6Si_2O_{13}$) and the like; and the magnesioaluminate includes magnesioaluminate spinel ($MgAl_2O_4$) and the like.

The inorganic non-metallic material is mainly applied to the field of building materials including traditional building materials such as cement, glass and ceramics, and novel building materials such as permeable bricks, glass ceramics, geopolymers, mineral wool and porous materials. China's building materials market is huge and growing, solid wastes are converted into inorganic non-metallic materials in a high-value mode, the inorganic non-metallic materials are applied to the field of building materials, and a large amount of solid wastes can be absorbed, so that the environmental pressure caused by the solid wastes can be effectively relieved, and the consumption of the traditional inorganic non-metallic raw materials is reduced.

At present, a wet process and a pyrogenic process are used for solid waste recycling, however, the two processes are aimed at several specific solid wastes, do not consider the basic oxide units in the solid wastes, and lack a scientific composition design mechanism and solution for solid waste. The wet process products are mainly cementitious materials such as cement concrete and permeable bricks, and the solid wastes containing active components and inert components are utilized as cementitious materials and aggregates respectively. This process includes the following steps: selecting solid wastes serving as a cementitious material and aggregate; crushing and grinding the solid wastes into fine powder, and uniformly mixing to obtain a mixture; adding water into the mixture, stirring to obtain a slurry, and performing injection molding; and curing at room temperature or high temperature to obtain the cement concrete and permeable bricks. The pyrogenic process products are mainly ceramics and glass ceramics. This process includes the following steps: selecting proper solid wastes for blending to obtain a mixture; after the mixture is formed, ceramic is obtained after high-temperature sintering; and glass ceramics is obtained after melting, casting and thermally treating.

Chinese Patent Application (CN114671633A) discloses a full solid waste clinker-free cementitious material, conductive mortar and a preparation method thereof, wherein the raw materials include soda residue, steel slag, red mud, waste gypsum, biomass ash, and slag. The soda residue, the steel slag and the red mud are used as alkali activators, the waste gypsum is used as a sulfate activator, and the slag and the biomass ash are used as active materials; and the slag and the biomass ash generate hydrated calcium silicate gel and ettringite under the dual activation of alkali-sulfate, so that the slurry has cohesiveness and can replace cement. However, this technology does not consider scientific composition design for basic oxide units in the solid wastes, has a great technical limitation, and has unstable product performance due to higher content of salt impurities and alkaline impurities in the solid wastes.

Chinese Patent Application (CN115477502A) discloses a process for producing a permeable brick by utilizing solid wastes, wherein the raw materials include iron tailing slag, fly ash, aeolian sand, diatomite, cement, and straw powder. The iron tailing slag, the fly ash and the aeolian sand are used as aggregate; the diatomite and the cement are used as cementitious materials; the straw powder is used as a reinforcing material. However, this technology does not consider scientific composition design for basic oxide units in the solid wastes, has a great technical limitation, and has a low solid waste treatment capacity due to low addition amounts of solid waste iron tailing slag and fly ash.

Chinese Patent Application (CN106630640A) discloses a method for preparing glass ceramics by comprehensively utilizing solid wastes. The method prepares wollastonite glass ceramics by mixing industrial waste residues such as copper tailings, red mud tailings and carbide slag according to a certain proportion and is used for building decorative materials. However, the treated solid wastes are only copper tailings, red mud tailings and carbide slag, and the mineral phase of the glass ceramics product is only wollastonite, consequently, it has a large limitation; and valuable metals in the solid wastes are not recycled.

Chinese Patent Application (CN112958584A) discloses a method for utilizing secondary aluminium ash to reduce dangerous solid waste heavy metals and slag. The method includes mixing secondary aluminium ash with dangerous solid waste, waste glass and quick lime, using aluminium nitride in the secondary aluminium ash as a reducing agent, and adopting a melting method to reduce the dangerous solid waste heavy metals into metal phases, wherein the slag is utilized for building materials in a high-value mode. However, the treated solid waste is only secondary aluminium ash, dangerous solid waste and waste glass, the target mineral phase composition region of the product is narrow, and the application range is small because no systematic composition calculation and design program exists.

Chinese Patent Application (CN111995436A) discloses a solid waste ceramic tile and a preparation method thereof, wherein the raw materials include ceramic waste, red mud, coal gangue, basalt, bentonite and zircon, and the raw materials are milled, dried, pressed and formed, dried, applied with base glaze, applied with surface glaze, dried, and fired to obtain the solid waste ceramic tile. However, the red mud contains a large amount of valuable iron elements, iron resources are wasted by directly firing ceramics, and the chemical performance and high temperature resistance of ferric oxide are poor; consequently, the service performance of the ceramics is affected.

In summary, the existing solid waste recycling technology aims at several specific solid wastes, does not consider the basic oxide units in the solid wastes, and lacks a scientific composition design mechanism and solution for solid waste. Therefore, there is an urgent need for a multi-source solid waste synergistic recycling technology to achieve the recycling of all inorganic solid wastes into inorganic non-metallic materials and to recover valuable metals from the solid wastes.

## SUMMARY

To overcome the defects in the prior technology, the present invention provides a multi-source solid waste recycling method based on composition design for calcium-silicon-aluminium-magnesium oxide. The method reduces valuable metals in the solid waste into alloys, and the slag is used for the inorganic non-metallic material in a high-value mode, so that the problem of disposal of multi-source solid waste is completely solved.

## The technical solutions adopted by the present invention:

A multi-source solid waste recycling method based on composition design for calcium-silicon-aluminium-magnesium oxide includes the following steps: collecting multi-source solid waste composition data; calculating and designing compositions of calcium oxide, silicon oxide, aluminium oxide and magnesium oxide units to obtain an inorganic non-metallic raw material with a target composition; and melting the raw material into slag, and using carbon, metallic aluminium, aluminium nitride, aluminium carbide, silicon nitride and silicon carbide in the multi-source solid waste as reducing agents, wherein the slag provides a high-temperature homogeneous reaction environment and serves as a "solvent" for reactants, the reducing agents reduce valuable metals in the slag to obtain an alloy, thereby achieving recovery of the valuable metals, and the slag is used for the inorganic non-metallic material in a high-value mode.

Further, a calculation method for a composition matrix of the calcium oxide, silicon oxide, aluminium oxide and magnesium oxide units is as follows:

$$\begin{bmatrix} P_1 & P_2 & \dots & P_n \end{bmatrix} \begin{bmatrix} 1 & Q_{1-CaO} & Q_{1-SiO2} & Q_{1-Al2O3} & Q_{1-MgO} \\ 1 & Q_{2-CaO} & Q_{2-SiO2} & Q_{2-Al2O3} & Q_{2-MgO} \\ \vdots & \vdots & \vdots & \vdots & \vdots \\ 1 & Q_{n-CaO} & Q_{n-SiO2} & Q_{n-Al2O3} & Q_{n-MgO} \end{bmatrix} * \frac{1}{\sum_{i=1}^{n} P_i * G_i}$$

$$= \begin{bmatrix} \sum_{i=1}^{n} P_i * G_i & \alpha & \beta & \gamma & \delta \end{bmatrix}$$

wherein $P_n$ is an addition amount (weight percentage) of an $n^{th}$ solid waste;

$Q_{n-CaO}$ is a content (weight percentage) of CaO in the $n^{th}$ solid waste;
$Q_{n-SiO2}$ is a content (weight percentage) of $SiO_2$ in the $n^{th}$ solid waste;
$Q_{n-Al2O3}$ is a content (weight percentage) of $Al_2O_3$ in the $n^{th}$ solid waste;
$Q_{n-MgO}$ is a content (weight percentage) of MgO in the $n^{th}$ solid waste;
$G_i$ is a total content (weight percentage) of CaO, $SiO_2$, $Al_2O_3$ and MgO in an $i^{th}$ solid waste;

α is a content (weight percentage) of CaO in a target mineral phase composition region;

β is a content (weight percentage) of $SiO_2$ in the target mineral phase composition region;

γ is a content (weight percentage) of $Al_2O_3$ in a target mineral phase composition region;

δ is a content (weight percentage) of MgO in a target mineral phase composition region; and

a sum of α, β, γ, and δ is 1.

Further, the multi-source solid wastes include industrial solid wastes and domestic solid wastes. The industrial solid wastes include but are not limited to: at least one of desulfurized gypsum, steel slag, magnesium slag, electric furnace slag, waste incineration fly ash, phosphogypsum, blast furnace slag, pickling sludge, waste glass, iron tailings, fly ash, coal gangue, desulfurized manganese slag, aluminium ash slag, and red mud. The domestic solid wastes include but are not limited to: at least one of waste incineration fly ash, waste incineration bottom ash, and municipal sludge.

Further, the slag provides a high-temperature homogeneous reaction environment, serves as a "solvent" for reactants, and converts reduction reactions from solid/solid and solid/liquid heterogeneous reactions into homogeneous reactions.

Further, the reducing agent in the multi-source solid waste is selected from at least one of carbon, metallic aluminium, aluminium nitride, aluminium carbide, silicon nitride, and silicon carbide.

Further, the inorganic non-metallic material is selected from one of a silicate-based inorganic non-metallic material, an aluminate-based inorganic non-metallic material, an aluminosilicate-based inorganic non-metallic material, and a magnesioaluminate-based inorganic non-metallic material.

Further, the multi-source solid waste recycling method based on composition design for calcium-silicon-aluminium-magnesium oxide described above specifically includes:

S1. Data collection: collecting multi-source solid waste composition data, namely determining contents of CaO, $SiO_2$, $Al_2O_3$ and MgO in the multi-source solid waste;

S2. Determination of a target mineral phase composition and a solid waste raw material: determining a main mineral phase in the inorganic non-metallic material for which the slag is used in a high-value mode, determining a target mineral phase composition region according to $CaO-SiO_2-Al_2O_3$, $CaO-SiO_2-MgO$, $CaO-Al_2O_3-MgO$, and $SiO_2-Al_2O_3-MgO$ ternary phase diagrams, namely content (weight percentage) ranges of CaO, $SiO_2$, $Al_2O_3$ and MgO, and selecting two or more solid wastes or industrial raw materials as raw materials;

S3. Composition calculation and design: substituting the composition data of the selected solid wastes and the target mineral phase composition data into a composition calculation matrix, solving the matrix to obtain addition amounts of the selected solid wastes, and uniformly blending to obtain an inorganic non-metallic raw material with a target composition;

S4. Melting: heating the raw material to 1300-1800 °C, and then keeping the temperature for 1.0-3.0 h to melt the raw material into slag;

S5. Reduction: the slag provides a high-temperature homogeneous reaction environment and serves as a "solvent" for reactants, and the reducing agents reduce valuable metals in the slag to obtain an alloy;

S6. Separation of slag and alloy: the alloy is settled to a bottom of the slag and separated from the slag because a density of the alloy is greater than that of the slag; and

S7. High-value utilization of slag: the slag is separately used for a silicate-based inorganic non-metallic material, an aluminate-based inorganic non-metallic material, an aluminosilicate-based inorganic non-metallic material, and a magnesioaluminate-based inorganic non-metallic material in a high-value mode according to the target mineral phase composition.

**The principle of the present invention:**

(1) The multi-source solid waste contains a large amount of CaO, $SiO_2$, $Al_2O_3$, and MgO; meanwhile, the CaO, $SiO_2$, $Al_2O_3$ and MgO are main compositions of a mineral phase that is a basic unit of an inorganic non-metallic material. The present invention fully utilizes the resource attributes of solid wastes, synthesizes CaO, $SiO_2$, $Al_2O_3$ and MgO into a target mineral phase through a melting process, and is used to prepare inorganic non-metallic materials in a high-value mode, thereby achieving the recycling of all inorganic solid wastes.

(2) The present invention achieves multi-source solid waste synergistic recycling by scientific and reasonable composition design. According to the target mineral phase composition regions (available from software FactSage7.0 and higher versions) in $CaO-SiO_2-Al_2O_3$, $CaO-SiO_2-MgO$, $CaO-Al_2O_3-MgO$ and $SiO_2-Al_2O_3-MgO$ ternary phase diagrams and the contents of CaO, $SiO_2$, $Al_2O_3$ and MgO of the selected multi-source solid wastes, matrix calculation is adopted to obtain an addition amount of each solid waste, so that the accurate preparation of an inorganic non-metallic material with a target mineral phase from the multi-source solid wastes is achieved.

(3) According to the composition requirements of the target inorganic non-metallic material, the present invention can prepare an inorganic non-metallic material with any mineral phase by adjusting the addition amount of each solid waste to design the contents of CaO, $SiO_2$, $Al_2O_3$, and MgO. The any mineral phase described above includes: silicate mineral phases such as tricalcium silicate ($Ca_3SiO_5$), dicalcium silicate ($Ca_2SiO_4$), wollastonite ($CaSiO_3$), rankinite ($Ca_3Si_2O_7$), asbestos ($CaMg_3Si_4O_{12}$) and olivine ($Mg_2SiO_4$); aluminate mineral phases such as dodecacalcium heptaluminate ($Ca_{12}Al_4O_{33}$), tricalcium aluminate ($Ca_3Al_2O_6$), calcium aluminate ($CaAl_2O_4$) and calcium dialuminate ($CaAl_4O_7$); aluminosilicate mineral phases such as gehlenite ($Ca_2Al_2SiO_7$), anorthite ($CaAl_2Si_2O_8$) and mullite ($Al_6Si_2O_{13}$); and magnesioaluminate mineral phase such as magnesioaluminate spinel ($MgAl_2O_4$).

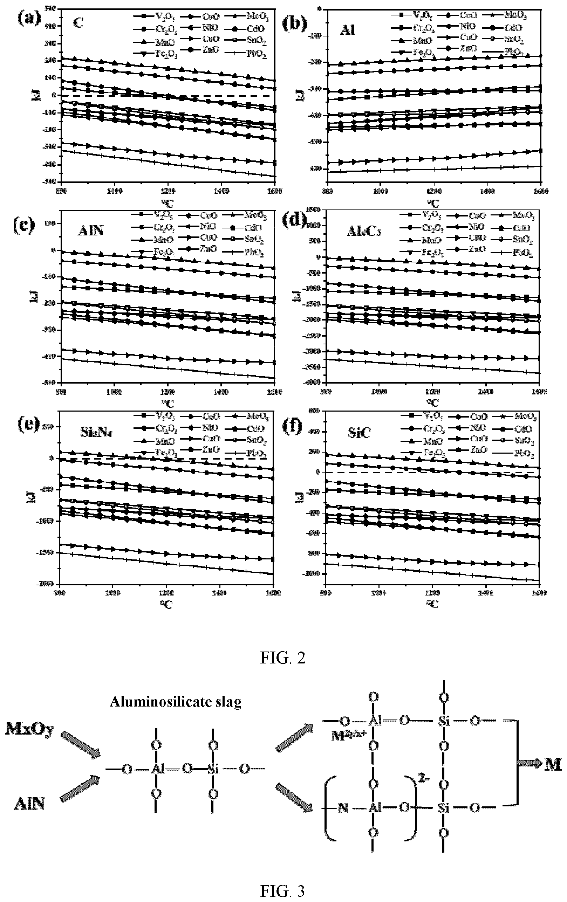

(4) The Gibbs free energy of the reaction of carbon, metallic aluminium, aluminium nitride, aluminium carbide, silicon nitride and silicon carbide with $V_2O_5$, $Cr_2O_3$, MnO, $Fe_2O_3$, CoO, NiO, CuO, ZnO, MoOs, CdO, $SnO_2$ and $PbO_2$ can be shown in FIG. 3, and the Gibbs free energy of the reaction of different reducing agents with oxides at different temperatures can be determined. The reaction equations are shown in formulas (1) to (6). As shown in the figure, when the temperature is greater than 1200 °C, the Gibbs free energy of the reduction of $V_2O_5$, $Fe_2O_3$, CoO, NiO, CuO, ZnO, $MoO_3$, CdO, $SnO_2$ and $PbO_2$ by carbon, metallic aluminium, aluminium nitride, aluminium carbide, silicon nitride and silicon carbide is less than zero, and the Gibbs free energy of the reduction of $Cr_2O_3$ and MnO by metallic aluminium, aluminium nitride, aluminium carbide and silicon nitride is less than zero. Thus, the reduction and recovery of valuable metals by carbon, aluminium metal, aluminium nitride, aluminium carbide, silicon nitride and silicon carbide are thermodynamically feasible.

$$C + 2/yM_xO_y = 2x/yM + CO_2(g) \qquad (1)$$

$$Al + 3/2yM_xO_y = 3x/2yM + 1/2Al_2O_3 \qquad (2)$$

$$AlN + 3/2yM_xO_y = 3x/2yM + 1/2Al_2O_3 + 1/2N_2(g) \qquad (3)$$

$$Al_4C_3 + 12/yM_xO_y = 12x/yM + 2Al_2O_3 + 3CO_2(g) \qquad (4)$$

$$Si_3N_4 + 6/yM_xO_y = 6x/yM + 3SiO_2 + 2N_2(g) \qquad (5)$$

$$SiC + 4/yM_xO_y = 4x/yM + SiO_2 + CO_2 (g) \qquad (6)$$

(5) The mixture is melted and transformed into slag, and the slag, as an aqueous solution, provides a high-temperature homogeneous reaction environment, serves as a "solvent" for reactants, and can dissolve valuable metal oxides, aluminium nitride, aluminium carbide, silicon nitride and silicon carbide. The valuable metal oxides enter the slag to be dissociated into metal cations, the aluminium nitride, the aluminium carbide, the silicon nitride and the silicon carbide enter the slag to be compounded into carbon/nitrogen-containing radical anions, and the metal cations and the carbon/nitrogen-containing radical anions are subjected to a double-ion reaction to achieve electron transfer. The reaction process is shown in FIG. 3. Although carbon and metallic aluminium cannot enter the aluminosilicate slag, the wettability of the carbon and the slag is better, and the density of the metallic aluminium is similar to that of the slag, so that the carbon and the metallic aluminium can be in contact with metal cations in the slag for a long time.

Thus, the reduction and recovery of valuable metals by carbon, aluminium metal, aluminium nitride, aluminium carbide, silicon nitride and silicon carbide is kinetically feasible.

**The beneficial effects of the present invention:**

(1) The existing solid waste recycling solution only aims at one or more solid wastes and has a great limitation. The multi-source solid waste recycling method based on composition design for calcium-silicon-aluminium-magnesium oxide provided by the present invention has universality and is suitable for recycling all inorganic solid wastes.

(2) The present invention can select proper mineral phases as basic units of inorganic non-metallic materials based on the distribution types of solid wastes in different places, and has the advantages of strong adaptability, strong operability and easy industrialization.

(3) The existing composition design solution for solid waste pyrogenic process recycling is mostly based on experience, does not consider basic oxide units in the solid waste, and lacks a scientific composition design mechanism and solution. The present invention collects multi-source solid waste composition data, and obtains an addition amount of each solid waste by adopting matrix calculation according to a target mineral phase composition region and the contents of CaO, SiO$_2$, Al$_2$O$_3$ and MgO of the selected solid wastes (composition design solution), so that the accurate preparation of an inorganic non-metallic material with a target mineral phase from the multi-source solid wastes is achieved.

(4) The existing solid waste pyrogenic process recycling mechanism is not clear, and a solution is designed based on experience mostly. The present invention proposes a concept of a high-temperature homogeneous reaction environment for aluminosilicate "solution" (slag), and the aluminosilicate slag can dissolve valuable metal oxides, aluminium nitride, aluminium carbide, silicon nitride and silicon carbide like an aqueous solution. The valuable metal oxides enter the aluminosilicate slag to be dissociated into metal cations, the aluminium nitride, the aluminium carbide, the silicon nitride and the silicon carbide enter the aluminosilicate slag to be compounded into carbon/nitrogen-containing radical anions, and the metal cations and the carbon/nitrogen-containing radical anions are subjected to a double-ion reaction to achieve electron transfer. The concept of a high-temperature homogeneous reaction environment for an aluminosilicate "solution" can provide theoretical guidance for the design of a solid waste pyrogenic process recycling solution.

(5) The existing reducing solid wastes (such as secondary aluminium ash and coal gangue) have reactivity, are easy to pollute the environment and cause a fire hazard when being piled up and disposed, and are difficult to recycle due to a large amount of impurity such as aluminium oxide, silicon dioxide and the like. The present invention uses carbon, metallic aluminium, aluminium nitride, aluminium carbide, silicon nitride and silicon carbide in the reducing solid wastes as reducing agents to reduce valuable metals in solid wastes as alloys, so that the recycling utilization of the reducing solid wastes is achieved.

(6) In the existing solid waste recycling solution, the recovery of valuable metals is mostly ignored, and the valuable metals enter into inorganic non-metallic materials; consequently, the metal resource is wasted. The present invention reduces and recovers valuable metals by using the reducing solid wastes, and has the effects of environmental friendliness, low carbon, low cost and high benefit.

(7) The present invention achieves the high-value utilization of the slag. Specifically, the slag is separately used for a silicate-based inorganic non-metallic material, an aluminate-based inorganic non-metallic material, an aluminosilicate-based inorganic non-metallic material, and a magnesioaluminate-based inorganic non-metallic material in a high-value mode according to the target mineral phase composition.

## BRIEF DESCRIPTION OF DRAWINGS

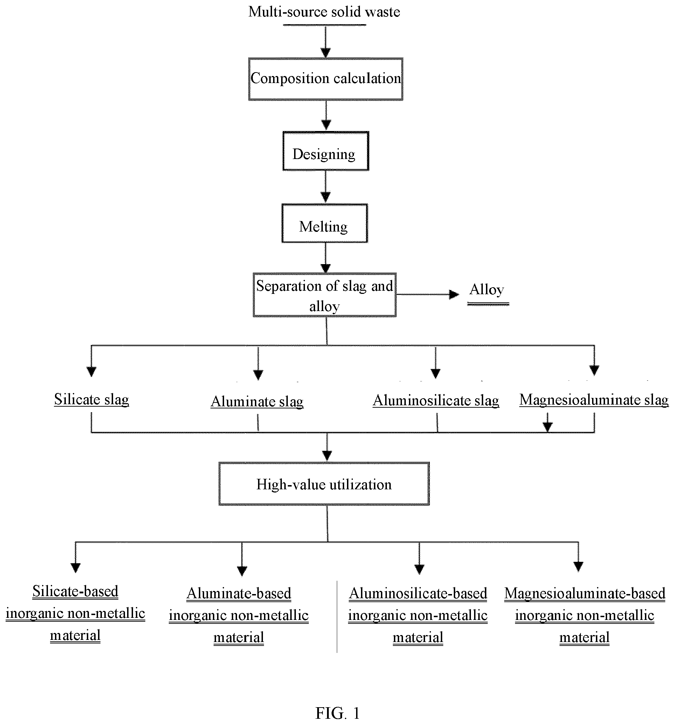

FIG. 1 is a flow chart of a process according to the present invention.

FIG. 2 is a graph showing a relationship between the Gibbs free energy and a temperature of the reaction of different substances with V$_2$O$_5$, Cr$_2$O$_3$, MnO, Fe$_2$O$_3$, CoO, NiO, CuO, ZnO, MoOs, CdO, SnO$_2$ and PbO$_2$ with an abscissa being the reaction temperature and an ordinate being the Gibbs free energy of reaction, wherein FIG. 2(a) is carbon, FIG. 2(b) is metallic aluminium, FIG. 2(c) is aluminium nitride, FIG. 2(d) is aluminium carbide, FIG. 2(e) is silicon nitride, and FIG. 2(f) is silicon carbide.

FIG. 3 shows a reaction process of reducing valuable metal oxides with aluminium nitride.

FIG. 4 is an XRD pattern of an aluminate-based inorganic non-metallic material according to Example 15.

FIG. 5 is an XRD pattern of an aluminate-based inorganic non-metallic material according to Example 17.

FIG. 6 is an XRD pattern of an aluminosilicate-based inorganic non-metallic material according to Example 21.

FIG. 7 is an XRD pattern of amorphous slag according to Comparative Example 1.

## DETAILED DESCRIPTION OF EMBODIMENTS

To make the objectives, technical solutions and advantages of the present invention more apparent, the present invention is further described in detail below with reference to the accompanying drawings and embodiments. It should be understood that the specific embodiments described herein are merely illustrative of the present invention and do not limit the present invention.

An embodiment of the present invention provides a multi-source solid waste recycling method based on composition design for calcium-silicon-aluminium-magnesium oxide, including the following steps: collecting multi-source solid waste composition data; calculating and designing compositions of calcium oxide, silicon oxide, aluminium oxide and magnesium oxide units to obtain an inorganic non-metallic raw material with a target composition; and melting the raw material into slag, wherein a reducing agent in the multi-source solid waste reduces valuable metals in the slag to obtain an alloy, thereby achieving recovery of the valuable metals, and the slag is used for the inorganic non-metallic material in a high-value mode.

A calculation method for a composition matrix of the calcium oxide, silicon oxide, aluminium oxide and magnesium oxide units is as follows:

$$[P_1 \quad P_2 \quad ... \quad P_n] \begin{bmatrix} 1 & Q_{1-CaO} & Q_{1-SiO2} & Q_{1-Al2O3} & Q_{1-MgO} \\ 1 & Q_{2-CaO} & Q_{2-SiO2} & Q_{2-Al2O3} & Q_{2-MgO} \\ \vdots & \vdots & \vdots & \vdots & \vdots \\ 1 & Q_{n-CaO} & Q_{n-SiO2} & Q_{n-Al2O3} & Q_{n-MgO} \end{bmatrix} * \frac{1}{\sum_{i=1}^{n} P_i * G_i}$$

$$= \begin{bmatrix} \sum_{i=1}^{n} P_i * G_i & \alpha & \beta & \gamma & \delta \end{bmatrix}$$

wherein $P_n$ is an addition amount of an $n^{th}$ solid waste; $Q_{n-CaO}$ is a content of CaO in the $n^{th}$ solid waste; $Q_{n-SiO2}$ is a content of $SiO_2$ in the $n^{th}$ solid waste; $Q_{n-Al2O3}$ is a content of $Al_2O_3$ in the $n^{th}$ solid waste; $Q_{n-MgO}$ is a content of MgO in the $n^{th}$ solid waste; $G_i$ is a total content of CaO, $SiO_2$, $Al_2O_3$ and MgO in an $i^{th}$ solid waste; $\alpha$ is a content of CaO in a target mineral phase composition region; $\beta$ is a content of $SiO_2$ in the target mineral phase composition region; $\gamma$ is a content of $Al_2O_3$ in a target mineral phase composition region; $\delta$ is a content of MgO in a target mineral phase composition region; a sum of $\alpha$, $\beta$, $\gamma$, and $\delta$ is 1; and the addition amount and content refer to weight percentage. Several different cases are exemplified below.

**Example 1**

The waste incineration fly ash, the waste incineration bottom ash and the coal gangue were recycled to prepare a silicate-based inorganic non-metallic material with tricalcium silicate ($Ca_3SiO_5$) as a main mineral phase. The multi-source solid waste composition data (see Table 1) were collected; a $CaO$-$SiO_2$-$Al_2O_3$ phase diagram containing a tricalcium silicate phase was selected, a composition range of the tricalcium silicate was read from the phase diagram, a content of the impurity MgO was limited, and the contents of CaO, $SiO_2$, $Al_2O_3$ and MgO were determined as 65.0-75.0 wt.%, 15.0-25.0 wt.%, 0-10.0 wt.% and 0-10.0 wt.%, respectively; and the composition data of the waste incineration fly ash, the waste incineration bottom ash and the coal gangue and the composition data of the tricalcium silicate were substituted into a composition calculation matrix:

$$\begin{bmatrix} P_{\text{waste incineration fly ash}} & P_{\text{waste incineration bottom ash}} & P_{\text{coal gangue}} \end{bmatrix} \begin{bmatrix} 1 & 0.463 & 0.084 & 0.018 & 0.027 \\ 1 & 0.259 & 0.421 & 0.086 & 0.037 \\ 1 & 0.035 & 0.513 & 0.218 & 0.022 \end{bmatrix} \frac{1}{P_{\text{waste incineration fly ash}} * 0.592 + P_{\text{waste incineration bottom ash}} * 0.803 + P_{\text{coal gangue}} * 0.788}$$

$$= \begin{bmatrix} P_{\text{waste incineration fly ash}} * 0.592 + P_{\text{waste incineration bottom ash}} * 0.803 + P_{\text{coal gangue}} * 0.788 & 0.650 \sim 0.750 & 0.150 \sim 0.250 & 0 \sim 0.100 & 0 \sim 0.100 \end{bmatrix}$$

The matrix was solved to obtain the addition amounts of the waste incineration fly ash, the waste incineration bottom ash and the coal gangue, that is, $P_{\text{waste incineration fly ash}}$, $P_{\text{waste incineration bottom ash}}$ and $P_{\text{coal gangue}}$ are 90.8 wt.%, 1.7 wt.% and 7.5 wt.%, respectively; the raw materials were uniformly mixed to obtain a mixture; the mixture was heated to 1800 °C, this temperature was kept for 3 h, and the mixture was molten into slag; wherein the carbon in the coal gangue reduces the valuable metals in the slag into an alloy, and the slag is utilized for the silicate-based inorganic non-metallic material in a high-value mode.

**Table 1. Multi-source solid waste compositions (wt.%)**

| Compositions | CaO | $SiO_2$ | $Al_2O_3$ | MgO | $Na_2O$ | $Fe_2O_3$ | Others |
|---|---|---|---|---|---|---|---|
| Desulfurized gypsum | 67.4 | 4.3 | 1.3 | 1.9 | - | 1.1 | 24.0 |
| Steel slag | 57.4 | 23.0 | 1.0 | 3.0 | 0.1 | 6.0 | 9.5 |
| Magnesium slag | 50.2 | 41.6 | 1.0 | 2.0 | - | 4.2 | 1.0 |
| Electric furnace slag | 49.7 | 27.8 | 3.4 | 6.5 | - | - | 12.6 |
| Waste incineration fly ash | 46.3 | 8.4 | 1.8 | 2.7 | 6.2 | 1.3 | 33.3 |
| Phosphogypsum | 37.8 | 8.3 | 0.9 | 0.1 | 0.1 | 0.6 | 52.2 |
| Blast furnace slag | 35.3 | 34.9 | 16.3 | 10.1 | - | 0.8 | 2.6 |
| Pickling sludge | 26.3 | 6.9 | 2.1 | 1.3 | 1.3 | 26.3 | 35.8 |
| Waste glass | 9.5 | 73.9 | 0.6 | 3.1 | 11.4 | 0.4 | 1.1 |

(continued)

| Compositions | CaO | SiO$_2$ | Al$_2$O$_3$ | MgO | Na$_2$O | Fe$_2$O$_3$ | Others |
|---|---|---|---|---|---|---|---|
| Iron tailings | 3.2 | 63.3 | 15.0 | 4.3 | 0.8 | 11.2 | 2.2 |
| Fly ash | 10.1 | 54.0 | 18.4 | 1.1 | 1.0 | 9.6 | 5.8 |
| Coal gangue | 3.5 | 51.3 | 21.8 | 2.2 | - | 6.4 | 14.8 |
| Desulfurized manganese slag | 16.2 | 42.2 | 10.1 | 5.1 | 1.6 | 5.7 | 19.1 |
| Waste incineration bottom ash | 25.9 | 42.1 | 8.6 | 3.7 | 3.9 | 5.7 | 10.1 |
| Municipal sludge | 19.5 | 35.4 | 18.7 | 2.3 | - | 9.8 | 14.3 |
| Aluminium ash slag | 1.5 | 4.6 | 79.3 | 5.7 | 0.9 | 3.9 | 4.1 |
| Red mud | 0.8 | 11.5 | 24.0 | 0.1 | 6.7 | 48.8 | 14.8 |

**Example 2**

The waste incineration fly ash, the waste incineration bottom ash and the coal gangue were recycled to prepare a silicate-based inorganic non-metallic material with tricalcium silicate (Ca$_3$SiO$_5$) as a main mineral phase. The multi-source solid waste composition data (see Table 1) were collected; a CaO-SiO$_2$-Al$_2$O$_3$ phase diagram containing a tricalcium silicate phase was selected, a composition range of the tricalcium silicate was read from the phase diagram, a content of the impurity MgO was limited, and the contents of CaO, SiO$_2$, Al$_2$O$_3$ and MgO were determined as 65.0-75.0 wt.%, 15.0-25.0 wt.%, 0-10.0 wt.% and 0-10.0 wt.%, respectively; and the composition data of the waste incineration fly ash, the waste incineration bottom ash and the coal gangue and the composition data of the tricalcium silicate were substituted into a composition calculation matrix:

$$\begin{bmatrix} P_{\text{waste incineration fly ash}} & P_{\text{waste incineration bottom ash}} & P_{\text{coal gangue}} \end{bmatrix} \begin{bmatrix} 1 & 0.463 & 0.084 & 0.018 & 0.027 \\ 1 & 0.259 & 0.421 & 0.086 & 0.037 \\ 1 & 0.035 & 0.513 & 0.218 & 0.022 \end{bmatrix} \frac{1}{P_{\text{waste incineration fly ash}} * 0.592 + P_{\text{waste incineration bottom ash}} * 0.803 + P_{\text{coal gangue}} * 0.788}$$

$$= \begin{bmatrix} P_{\text{waste incineration fly ash}} * 0.592 + P_{\text{waste incineration bottom ash}} * 0.803 + P_{\text{coal gangue}} * 0.788 & 0.650 \sim 0.750 & 0.150 \sim 0.250 & 0 \sim 0.100 & 0 \sim 0.100 \end{bmatrix}$$

The matrix was solved to obtain the addition amounts of the waste incineration fly ash, the waste incineration bottom ash and the coal gangue, that is, P$_{\text{waste incineration fly ash}}$, P$_{\text{waste incineration bottom ash}}$ and P$_{\text{coal gangue}}$ are 83.2 wt.%, 12.9 wt.% and 3.9 wt.%, respectively; the raw materials were uniformly mixed to obtain a mixture; the mixture was heated to 1760 °C, this temperature was kept for 2.5 h, and the mixture was molten into slag; wherein the carbon in the coal gangue reduces the valuable metals in the slag into an alloy, and the slag is utilized for the silicate-based inorganic non-metallic material in a high-value mode.

**Example 3**

The desulfurized gypsum, the steel slag and the coal gangue were recycled to prepare a silicate-based inorganic non-metallic material with dicalcium silicate (Ca$_2$SiO$_4$) as a main mineral phase. The multi-source solid waste composition data (see Table 1) were collected; a CaO-SiO$_2$-Al$_2$O$_3$ phase diagram containing a dicalcium silicate phase was selected, a composition range of the dicalcium silicate was read from the phase diagram, a content of the impurity MgO was limited, and the contents of CaO, SiO$_2$, Al$_2$O$_3$ and MgO were determined as 55.0-65.0 wt.%, 25.0-35.0 wt.%, 0-10.0 wt.% and 0-10.0 wt.%, respectively; and the composition data of the desulfurized gypsum, the steel slag and the coal gangue and the composition data of the dicalcium silicate were substituted into a composition calculation matrix:

$$\begin{bmatrix} P_{\text{desulfurized gypsum}} & P_{\text{steel slag}} & P_{\text{coal gangue}} \end{bmatrix} \begin{bmatrix} 1 & 0.674 & 0.043 & 0.013 & 0.019 \\ 1 & 0.574 & 0.230 & 0.010 & 0.030 \\ 1 & 0.035 & 0.513 & 0.218 & 0.022 \end{bmatrix} \frac{1}{P_{\text{desulfurized gypsum}} * 0.749 + P_{\text{steel slag}} * 0.844 + P_{\text{coal gangue}} * 0.788}$$

$$= \begin{bmatrix} P_{\text{desulfurized gypsum}} * 0.749 + P_{\text{steel slag}} * 0.844 + P_{\text{coal gangue}} * 0.788 & 0.550 \sim 0.650 & 0.250 \sim 0.350 & 0 \sim 0.100 & 0 \sim 0.100 \end{bmatrix}$$

The matrix was solved to obtain the addition amounts of the desulfurized gypsum, the steel slag and the coal gangue, that is, $P_{desulfurized\ gypsum}$, $P_{steel\ slag}$ and $P_{coal\ gangue}$ are 33.1 wt.%, 41.7 wt.% and 25.2 wt.%, respectively; the raw materials were uniformly mixed to obtain a mixture; the mixture was heated to 1750 °C, this temperature was kept for 2.0 h, and the mixture was molten into slag; wherein the carbon in the coal gangue reduces the valuable metals in the slag into an alloy, and the slag is utilized for the silicate-based inorganic non-metallic material in a high-value mode.

## Example 4

The desulfurized gypsum, the steel slag and the coal gangue were recycled to prepare a silicate-based inorganic non-metallic material with dicalcium silicate ($Ca_2SiO_4$) as a main mineral phase. The multi-source solid waste composition data (see Table 1) were collected; a $CaO$-$SiO_2$-$Al_2O_3$ phase diagram containing a dicalcium silicate phase was selected, a composition range of the dicalcium silicate was read from the phase diagram, a content of the impurity MgO was limited, and the contents of CaO, $SiO_2$, $Al_2O_3$ and MgO were determined as 55.0-65.0 wt.%, 25.0-35.0 wt.%, 0-10.0 wt.% and 0-10.0 wt.%, respectively; and the composition data of the desulfurized gypsum, the steel slag and the coal gangue and the composition data of the dicalcium silicate were substituted into a composition calculation matrix:

$$\begin{bmatrix} P_{desulfurized\ gypsum} & P_{steel\ slag} & P_{coal\ gangue} \end{bmatrix} \begin{bmatrix} 1 & 0.674 & 0.043 & 0.013 & 0.019 \\ 1 & 0.574 & 0.230 & 0.010 & 0.030 \\ 1 & 0.035 & 0.513 & 0.218 & 0.022 \end{bmatrix} \frac{1}{P_{desulfurized\ gypsum} * 0.749 + P_{steel\ slag} * 0.844 + P_{coal\ gangue} * 0.788}$$

$$= \begin{bmatrix} P_{desulfurized\ gypsum} * 0.749 + P_{steel\ slag} * 0.844 + P_{coal\ gangue} * 0.788 & 0.550{\sim}0.650 & 0.250{\sim}0.350 & 0{\sim}0.100 & 0{\sim}0.100 \end{bmatrix}$$

The matrix was solved to obtain the addition amounts of the desulfurized gypsum, the steel slag and the coal gangue, that is, $P_{desulfurized\ gypsum}$, $P_{steel\ slag}$ and $P_{coal\ gangue}$ are 13.3 wt.%, 69.2 wt.% and 17.5 wt.%, respectively; the raw materials were uniformly mixed to obtain a mixture; the mixture was heated to 1710 °C, this temperature was kept for 1.0 h, and the mixture was molten into slag; wherein the carbon in the coal gangue reduces the valuable metals in the slag into an alloy, and the slag is utilized for the silicate-based inorganic non-metallic material in a high-value mode.

## Example 5

The steel slag, the waste incineration bottom ash and the coal gangue were recycled to prepare a silicate-based inorganic non-metallic material with rankinite ($Ca_3Si_2O_7$) as a main mineral phase. The multi-source solid waste composition data (see Table 1) were collected; a $CaO$-$SiO_2$-$Al_2O_3$ phase diagram containing a rankinite phase was selected, a composition range of the rankinite was read from the phase diagram, a content of the impurity MgO was limited, and the contents of CaO, $SiO_2$, $Al_2O_3$ and MgO were determined as 48.0-58.0 wt.%, 32.0-42.0 wt.%, 0-10.0 wt.% and 0-10.0 wt.%, respectively; and the composition data of the steel slag, the waste incineration bottom ash and the coal gangue and the composition data of the rankinite were substituted into a composition calculation matrix:

$$\begin{bmatrix} P_{steel\ slag} & P_{waste\ incineration\ bottom\ ash} & P_{coal\ gangue} \end{bmatrix} \begin{bmatrix} 1 & 0.574 & 0.230 & 0.010 & 0.030 \\ 1 & 0.259 & 0.421 & 0.086 & 0.037 \\ 1 & 0.035 & 0.513 & 0.218 & 0.022 \end{bmatrix} \frac{1}{P_{steel\ slag} * 0.844 + P_{waste\ incineration\ bottom\ ash} * 0.803 + P_{coal\ gangue} * 0.788}$$

$$= \begin{bmatrix} P_{steel\ slag} * 0.844 + P_{waste\ incineration\ bottom\ ash} * 0.803 + P_{coal\ gangue} * 0.788 & 0.480{\sim}0.580 & 0.320{\sim}0.420 & 0{\sim}0.100 & 0{\sim}0.100 \end{bmatrix}$$

The matrix was solved to obtain the addition amounts of the steel slag, the waste incineration bottom ash and the coal gangue, that is, $P_{steel\ slag}$, $P_{waste\ incineration\ bottom\ ash}$ and $P_{coal\ gangue}$ are 72.2 wt.%, 10.8 wt.% and 17.0 wt.%, respectively; the raw materials were uniformly mixed to obtain a mixture; the mixture was heated to 1600 °C, this temperature was kept for 1.5 h, and the mixture was molten into slag; wherein the carbon in the coal gangue reduces the valuable metals in the slag into an alloy, and the slag is utilized for the silicate-based inorganic non-metallic material in a high-value mode.

## Example 6

The steel slag, the waste incineration bottom ash and the coal gangue were recycled to prepare a silicate-based inorganic non-metallic material with rankinite ($Ca_3Si_2O_7$) as a main mineral phase. The multi-source solid waste composition data (see Table 1) were collected; a CaO-SiO$_2$-Al$_2$O$_3$ phase diagram containing a rankinite phase was selected, a composition range of the rankinite was read from the phase diagram, a content of the impurity MgO was limited, and the contents of CaO, SiO$_2$, Al$_2$O$_3$ and MgO were determined as 48.0-58.0 wt.%, 32.0-42.0 wt.%, 0-10.0 wt.% and 0-10.0 wt.%, respectively; and the composition data of the steel slag, the waste incineration bottom ash and the coal gangue and the composition data of the rankinite were substituted into a composition calculation matrix:

$$\begin{bmatrix} P_{\text{steel slag}} & P_{\text{waste incineration bottom ash}} & P_{\text{coal gangue}} \end{bmatrix} \begin{bmatrix} 1 & 0.574 & 0.230 & 0.010 & 0.030 \\ 1 & 0.259 & 0.421 & 0.086 & 0.037 \\ 1 & 0.035 & 0.513 & 0.218 & 0.022 \end{bmatrix} \frac{1}{P_{\text{steel slag}} * 0.844 + P_{\text{waste incineration bottom ash}} * 0.803 + P_{\text{coal gangue}} * 0.788}$$

$$= \begin{bmatrix} P_{\text{steel slag}} * 0.844 + P_{\text{waste incineration bottom ash}} * 0.803 + P_{\text{coal gangue}} * 0.788 & 0.480 \sim 0.580 & 0.320 \sim 0.420 & 0 \sim 0.100 & 0 \sim 0.100 \end{bmatrix}$$

The matrix was solved to obtain the addition amounts of the steel slag, the waste incineration bottom ash and the coal gangue, that is, P$_{\text{steel slag}}$, P$_{\text{waste incineration bottom ash}}$ and P$_{\text{coal gangue}}$ are 58.8 wt.%, 32.2 wt.% and 8.0 wt.%, respectively; the raw materials were uniformly mixed to obtain a mixture; the mixture was heated to 1520 °C, this temperature was kept for 1.0 h, and the mixture was molten into slag; wherein the carbon in the coal gangue reduces the valuable metals in the slag into an alloy, and the slag is utilized for the silicate-based inorganic non-metallic material in a high-value mode.

**Example 7**

The waste incineration fly ash, the waste glass and the coal gangue were recycled to prepare a silicate-based inorganic non-metallic material with wollastonite (CaSiO$_3$) as a main mineral phase. The multi-source solid waste composition data (see Table 1) were collected; a CaO-SiO$_2$-Al$_2$O$_3$ phase diagram containing a wollastonite phase was selected, a composition range of the wollastonite was read from the phase diagram, a content of the impurity MgO was limited, and the contents of CaO, SiO$_2$, Al$_2$O$_3$ and MgO were determined as 38.0-48.0 wt.%, 42.0-52.0 wt.%, 0-10.0 wt.% and 0-10.0 wt.%, respectively; and the composition data of the waste incineration fly ash, the waste glass and the coal gangue and the composition data of the wollastonite were substituted into a composition calculation matrix:

$$\begin{bmatrix} P_{\text{waste incineration fly ash}} & P_{\text{waste glass}} & P_{\text{coal gangue}} \end{bmatrix} \begin{bmatrix} 1 & 0.463 & 0.084 & 0.018 & 0.027 \\ 1 & 0.095 & 0.739 & 0.006 & 0.031 \\ 1 & 0.035 & 0.513 & 0.218 & 0.022 \end{bmatrix} \frac{1}{P_{\text{waste incineration fly ash}} * 0.592 + P_{\text{waste glass}} * 0.871 + P_{\text{coal gangue}} * 0.788}$$

$$= \begin{bmatrix} P_{\text{waste incineration fly ash}} * 0.592 + P_{\text{waste glass}} * 0.871 + P_{\text{coal gangue}} * 0.788 & 0.380 \sim 0.480 & 0.420 \sim 0.520 & 0.100 \sim 0.100 & 0 \sim 0.100 \end{bmatrix}$$

The matrix was solved to obtain the addition amounts of the waste incineration fly ash, the waste glass and the coal gangue, that is, P$_{\text{waste incineration fly ash}}$, P$_{\text{waste glass}}$ and P$_{\text{coal gangue}}$ are 60.5 wt.%, 32.7 wt.% and 6.8 wt.%, respectively; the raw materials were uniformly mixed to obtain a mixture; the mixture was heated to 1450 °C, this temperature was kept for 2 h, and the mixture was molten into slag; wherein the carbon in the coal gangue reduces the valuable metals in the slag into an alloy, and the slag is utilized for the silicate-based inorganic non-metallic material in a high-value mode.

**Example 8**

The waste incineration fly ash, the waste glass and the coal gangue were recycled to prepare a silicate-based inorganic non-metallic material with wollastonite (CaSiO$_3$) as a main mineral phase. The multi-source solid waste composition data (see Table 1) were collected; a CaO-SiO$_2$-Al$_2$O$_3$ phase diagram containing a wollastonite phase was selected, a composition range of the wollastonite was read from the phase diagram, a content of the impurity MgO was limited, and the contents of CaO, SiO$_2$, Al$_2$O$_3$ and MgO were determined as 38.0-48.0 wt.%, 42.0-52.0 wt.%, 0-10.0 wt.% and 0-10.0 wt.%, respectively; and the composition data of the waste incineration fly ash, the waste glass and the coal gangue and the composition data of the wollastonite were substituted into a composition calculation matrix:

$$\begin{bmatrix} P_{\substack{\text{waste} \\ \text{incineration} \\ \text{fly ash}}} & P_{\substack{\text{waste} \\ \text{glass}}} & P_{\substack{\text{coal} \\ \text{gangue}}} \end{bmatrix} \begin{bmatrix} 1 & 0.463 & 0.084 & 0.018 & 0.027 \\ 1 & 0.095 & 0.739 & 0.006 & 0.031 \\ 1 & 0.035 & 0.513 & 0.218 & 0.022 \end{bmatrix} \cdot \cfrac{1}{P_{\substack{\text{waste} \\ \text{incineration} \\ \text{fly ash}}} * 0.592 + P_{\substack{\text{waste} \\ \text{glass}}} * 0.871 + P_{\substack{\text{coal} \\ \text{gangue}}} * 0.788}$$

$$= \begin{bmatrix} P_{\substack{\text{waste} \\ \text{incineration} \\ \text{fly ash}}} * 0.592 + P_{\substack{\text{waste} \\ \text{glass}}} * 0.871 + P_{\substack{\text{coal} \\ \text{gangue}}} * 0.788 & 0.380 \sim 0.480 & 0.420 \sim 0.520 & 0.100 \sim 0.100 & 0 \sim 0.100 \end{bmatrix}$$

The matrix was solved to obtain the addition amounts of the waste incineration fly ash, the waste glass and the coal gangue, that is, $P_{\text{waste incineration fly ash}}$, $P_{\text{waste glass}}$ and $P_{\text{coal gangue}}$ are 58.0 wt.%, 28.2 wt.% and 13.8 wt.%, respectively; the raw materials were uniformly mixed to obtain a mixture; the mixture was heated to 1410 °C, this temperature was kept for 1.0 h, and the mixture was molten into slag; wherein the carbon in the coal gangue reduces the valuable metals in the slag into an alloy, and the slag is utilized for the silicate-based inorganic non-metallic material in a high-value mode.

**Example 9**

The waste glass, the coal gangue and the industrial magnesium oxide were recycled to prepare a silicate-based inorganic non-metallic material with olivine ($Mg_2SiO_4$) as a main mineral phase. The multi-source solid waste composition data (see Table 1) were collected; a $CaO$-$SiO_2$-$MgO$ phase diagram containing an olivine phase was selected, a composition range of the olivine was read from the phase diagram, a content of the impurity $Al_2O_3$ was limited, and the contents of $CaO$, $SiO_2$, $Al_2O_3$ and $MgO$ were determined as 0-10.0 wt.%, 33.0-43.0 wt.%, 0-10.0 wt.% and 47.0-57.0 wt.%, respectively; and the composition data of the waste glass, the coal gangue and the industrial magnesium oxide and the composition data of the olivine were substituted into a composition calculation matrix:

$$\begin{bmatrix} P_{\substack{\text{waste} \\ \text{glass}}} & P_{\substack{\text{coal} \\ \text{gangue}}} & P_{\substack{\text{industrial} \\ \text{magnesium} \\ \text{oxide}}} \end{bmatrix} \begin{bmatrix} 1 & 0.095 & 0.739 & 0.006 & 0.031 \\ 1 & 0.035 & 0.513 & 0.218 & 0.022 \\ 1 & 0 & 0 & 0 & 1.00 \end{bmatrix} \cdot \cfrac{1}{P_{\substack{\text{waste} \\ \text{glass}}} * 0.871 + P_{\substack{\text{coal} \\ \text{gangue}}} * 0.788 + P_{\substack{\text{industrial} \\ \text{magnesium} \\ \text{oxide}}} * 1.00}$$

$$= \begin{bmatrix} P_{\substack{\text{waste} \\ \text{glass}}} * 0.871 + P_{\substack{\text{coal} \\ \text{gangue}}} * 0.788 + P_{\substack{\text{industrial} \\ \text{magnesium} \\ \text{oxide}}} * 1.00 & 0 \sim 0.100 & 0.330 \sim 0.430 & 0 \sim 0.100 & 0.470 \sim 0.570 \end{bmatrix}$$

The matrix was solved to obtain the addition amounts of the waste glass, the coal gangue and the industrial magnesium oxide, that is, $P_{\text{waste glass}}$, $P_{\text{coal gangue}}$ and $P_{\text{industrial magnesium oxide}}$ are 30.2 wt.%, 23.9 wt.% and 45.9 wt.%, respectively; the raw materials were uniformly mixed to obtain a mixture; the mixture was heated to 1700 °C, this temperature was kept for 1.5 h, and the mixture was molten into slag; wherein the carbon in the coal gangue reduces the valuable metals in the slag into an alloy, and the slag is utilized for the silicate-based inorganic non-metallic material in a high-value mode.

**Example 10**

The waste glass, the coal gangue and the industrial magnesium oxide were recycled to prepare a silicate-based inorganic non-metallic material with olivine ($Mg_2SiO_4$) as a main mineral phase. The multi-source solid waste composition data (see Table 1) were collected; a $CaO$-$SiO_2$-$MgO$ phase diagram containing an olivine phase was selected, a composition range of the olivine was read from the phase diagram, a content of the impurity $Al_2O_3$ was limited, and the content ranges of $CaO$, $SiO_2$, $Al_2O_3$ and $MgO$ were determined as 0-10.0 wt.%, 33.0-43.0 wt.%, 0-10.0 wt.% and 47.0-57.0 wt.%, respectively; and the composition data of the waste glass, the coal gangue and the industrial magnesium oxide and the composition data of the olivine were substituted into a composition calculation matrix:

$$\begin{bmatrix} P_{\text{waste} \atop \text{glass}} & P_{\text{coal} \atop \text{gangue}} & P_{\text{industrial} \atop \text{magnesium} \atop \text{oxide}} \end{bmatrix} \begin{bmatrix} 1 & 0.095 & 0.739 & 0.006 & 0.031 \\ 1 & 0.035 & 0.513 & 0.218 & 0.022 \\ 1 & 0 & 0 & 0 & 1.00 \end{bmatrix} \frac{1}{P_{\text{waste} \atop \text{glass}} * 0.871 + P_{\text{coal} \atop \text{gangue}} * 0.788 + P_{\text{industrial} \atop \text{magnesium} \atop \text{oxide}} * 1.00}$$

$$= \begin{bmatrix} P_{\text{waste} \atop \text{glass}} * 0.871 + P_{\text{coal} \atop \text{gangue}} * 0.788 + P_{\text{industrial} \atop \text{magnesium} \atop \text{oxide}} * 1.00 & 0\sim 0.100 & 0.330\sim 0.430 & 0\sim 0.100 & 0.470\sim 0.570 \end{bmatrix}$$

The matrix was solved to obtain the addition amounts of the waste glass, the coal gangue and the industrial magnesium oxide, that is, $P_{\text{waste glass}}$, $P_{\text{coal gangue}}$ and $P_{\text{industrial magnesium oxide}}$ are 40.1 wt.%, 12.7 wt.% and 46.2 wt.%, respectively; the raw materials were uniformly mixed to obtain a mixture; the mixture was heated to 1620 °C, this temperature was kept for 1.0 h, and the mixture was molten into slag; wherein the carbon in the coal gangue reduces the valuable metals in the slag into an alloy, and the slag is utilized for the silicate-based inorganic non-metallic material in a high-value mode.

**Example 11**

The coal gangue, the waste glass, the municipal sludge and the industrial magnesium oxide were recycled to prepare a silicate-based inorganic non-metallic material with asbestos ($CaMg_3Si_4O_{12}$) as a main mineral phase. The multi-source solid waste composition data (see Table 1) were collected; a $CaO$-$SiO_2$-$MgO$ phase diagram containing an asbestos phase was selected, a composition range of the asbestos was read from the phase diagram, a content of the impurity $Al_2O_3$ was limited, and the contents of $CaO$, $SiO_2$, $Al_2O_3$ and $MgO$ were determined as 6.0-16.0 wt.%, 51.0-61.0 wt.%, 0-10.0 wt.% and 22.0-32.0 wt.%, respectively; and the composition data of the coal gangue, the waste glass, the municipal sludge and the industrial magnesium oxide and the composition data of the asbestos were substituted into a composition calculation matrix:

$$\begin{bmatrix} P_{\text{coal} \atop \text{gangue}} & P_{\text{waste} \atop \text{glass}} & P_{\text{municipal} \atop \text{sludge}} & P_{\text{industrial} \atop \text{magnesium} \atop \text{oxide}} \end{bmatrix} \begin{bmatrix} 1 & 0.035 & 0.513 & 0.218 & 0.022 \\ 1 & 0.095 & 0.739 & 0.006 & 0.031 \\ 1 & 0.195 & 0.354 & 0.187 & 0.023 \\ 1 & 0 & 0 & 0 & 1.00 \end{bmatrix} \frac{1}{P_{\text{coal} \atop \text{gangue}} * 0.788 + P_{\text{waste} \atop \text{glass}} * 0.871 + P_{\text{municipal} \atop \text{sludge}} * 0.759 + P_{\text{industrial} \atop \text{magnesium} \atop \text{oxide}} * 1.00}$$

$$= \begin{bmatrix} P_{\text{coal} \atop \text{gangue}} * 0.788 + P_{\text{waste} \atop \text{glass}} * 0.871 + P_{\text{municipal} \atop \text{sludge}} * 0.759 + P_{\text{industrial} \atop \text{magnesium} \atop \text{oxide}} * 1.00 & 0.060\sim 0.160 & 0.510\sim 0.610 & 0\sim 0.100 & 0.220\sim 0.320 \end{bmatrix}$$

The matrix was solved to obtain the addition amounts of the coal gangue, the waste glass, the municipal sludge and the industrial magnesium oxide, that is, $P_{\text{coal gangue}}$, $P_{\text{waste glass}}$, $P_{\text{municipal sludge}}$ and $P_{\text{industrial magnesium oxide}}$ are 5.9 wt.%, 48.9 wt.%, 24.0 wt.% and 21.2 wt.%, respectively; the raw materials were uniformly mixed to obtain a mixture; the mixture was heated to 1500 °C, this temperature was kept for 2.0 h, and the mixture was molten into slag; wherein the carbon in the coal gangue reduces the valuable metals in the slag into an alloy, and the slag is utilized for the silicate-based inorganic non-metallic material in a high-value mode.

**Example 12**

The coal gangue, the waste glass, the municipal sludge and the industrial magnesium oxide were recycled to prepare a silicate-based inorganic non-metallic material with asbestos ($CaMg_3Si_4O_{12}$) as a main mineral phase. The multi-source solid waste composition data (see Table 1) were collected; a $CaO$-$SiO_2$-$MgO$ phase diagram containing an asbestos phase was selected, a composition range of the asbestos was read from the phase diagram, a content of the impurity $Al_2O_3$ was limited, and the contents of $CaO$, $SiO_2$, $Al_2O_3$ and $MgO$ were determined as 6.0-16.0 wt.%, 51.0-61.0 wt.%, 0-10.0 wt.% and 22.0-32.0 wt.%, respectively; and the composition data of the coal gangue, the waste glass, the municipal sludge and the industrial magnesium oxide and the composition data of the asbestos were substituted into a composition calculation matrix:

$$\begin{bmatrix} P_{\text{coal gangue}} & P_{\text{waste glass}} & P_{\text{municipal sludge}} & P_{\text{industrial magnesium oxide}} \end{bmatrix} \begin{bmatrix} 1 & 0.035 & 0.513 & 0.218 & 0.022 \\ 1 & 0.095 & 0.739 & 0.006 & 0.031 \\ 1 & 0.195 & 0.354 & 0.187 & 0.023 \\ 1 & 0 & 0 & 0 & 1.00 \end{bmatrix} \frac{1}{P_{\text{coal gangue}} * 0.788 + P_{\text{waste glass}} * 0.871 + P_{\text{municipal sludge}} * 0.759 + P_{\text{industrial magnesium oxide}} * 1.00}$$

$$= \begin{bmatrix} P_{\text{coal gangue}} * 0.788 + P_{\text{waste glass}} * 0.871 + P_{\text{municipal sludge}} * 0.759 + P_{\text{industrial magnesium oxide}} * 1.00 & 0.060{\sim}0.160 & 0.510{\sim}0.610 & 0{\sim}0.100 & 0.220{\sim}0.320 \end{bmatrix}$$

The matrix was solved to obtain the addition amounts of the coal gangue, the waste glass, the municipal sludge and the industrial magnesium oxide, that is, $P_{\text{coal gangue}}$, $P_{\text{waste glass}}$, $P_{\text{municipal sludge}}$ and $P_{\text{industrial magnesium oxide}}$ are 3.0 wt.%, 53.0 wt.%, 22.8 wt.% and 21.2 wt.%, respectively; the raw materials were uniformly mixed to obtain a mixture; the mixture was heated to 1470 °C, this temperature was kept for 1.0 h, and the mixture was molten into slag; wherein the carbon in the coal gangue reduces the valuable metals in the slag into an alloy, and the slag is utilized for the silicate-based inorganic non-metallic material in a high-value mode.

## Example 13

The desulfurized gypsum and the aluminium ash slag were recycled to prepare an aluminate-based inorganic non-metallic material with tricalcium aluminate ($Ca_3Al_2O_6$) as a main mineral phase. The multi-source solid waste composition data (see Table 1) were collected; a $CaO\text{-}SiO_2\text{-}Al_2O_3$ phase diagram containing a tricalcium aluminate phase was selected, a composition range of the tricalcium aluminate was read from the phase diagram, a content of the impurity MgO was limited, and the contents of CaO, $SiO_2$, $Al_2O_3$ and MgO were determined as 52.0-62.0 wt.%, 0-10.0 wt.%, 28.0-38.0 wt.% and 0-10.0 wt.%, respectively; and the composition data of the desulfurized gypsum and the aluminium ash slag and the composition data of the tricalcium aluminate were substituted into a composition calculation matrix:

$$\begin{bmatrix} P_{\text{desulfurized gypsum}} & P_{\text{aluminium ash slag}} \end{bmatrix} \begin{bmatrix} 1 & 0.674 & 0.043 & 0.013 & 0.019 \\ 1 & 0.015 & 0.046 & 0.793 & 0.057 \end{bmatrix} \frac{1}{P_{\text{desulfurized gypsum}} * 0.749 + P_{\text{aluminium ash slag}} * 0.911}$$

$$= \begin{bmatrix} P_{\text{desulfurized gypsum}} * 0.592 + P_{\text{aluminium ash slag}} * 0.911 & 0.520{\sim}0.620 & 0{\sim}0.100 & 0.280{\sim}0.380 & 0{\sim}0.100 \end{bmatrix}$$

The matrix was solved to obtain the addition amounts of the desulfurized gypsum and the aluminium ash slag, that is, $P_{\text{desulfurized gypsum}}$ and $P_{\text{aluminium ash slag}}$ are 64.0 wt.% and 36.0 wt.%, respectively; the raw materials were uniformly mixed to obtain a mixture; the mixture was heated to 1700 °C, this temperature was kept for 3.0 h, and the mixture was molten into slag; wherein the aluminium nitride, aluminium carbide, and metallic aluminium in the aluminium ash slag reduce the valuable metals in the slag into an alloy, and the slag is utilized for the aluminate-based inorganic non-metallic material in a high-value mode.

## Example 14

The desulfurized gypsum and the aluminium ash slag were recycled to prepare an aluminate-based inorganic non-metallic material with tricalcium aluminate ($Ca_3Al_2O_6$) as a main mineral phase. The multi-source solid waste composition data (see Table 1) were collected; a $CaO\text{-}SiO_2\text{-}Al_2O_3$ phase diagram containing a tricalcium aluminate phase was selected, a composition range of the tricalcium aluminate was read from the phase diagram, a content of the impurity MgO was limited, and the contents of CaO, $SiO_2$, $Al_2O_3$ and MgO were determined as 52.0-62.0 wt.%, 0-10.0 wt.%, 28.0-38.0 wt.% and 0-10.0 wt.%, respectively; and the composition data of the desulfurized gypsum and the aluminium ash slag and the composition data of the tricalcium aluminate were substituted into a composition calculation matrix:

$$\begin{bmatrix} P_{\text{desulfurized gypsum}} & P_{\text{aluminium ash slag}} \end{bmatrix} \begin{bmatrix} 1 & 0.674 & 0.043 & 0.013 & 0.019 \\ 1 & 0.015 & 0.046 & 0.793 & 0.057 \end{bmatrix} \frac{1}{P_{\text{desulfurized gypsum}} * 0.749 + P_{\text{aluminium ash slag}} * 0.911}$$

$$= \begin{bmatrix} P_{\text{desulfurized gypsum}} * 0.592 + P_{\text{aluminium ash slag}} * 0.911 & 0.520{\sim}0.620 & 0{\sim}0.100 & 0.280{\sim}0.380 & 0{\sim}0.100 \end{bmatrix}$$

The matrix was solved to obtain the addition amounts of the desulfurized gypsum and the aluminium ash slag, that is, $P_{desulfurized\ gypsum}$ and $P_{aluminium\ ash\ slag}$ are 66.0 wt.% and 34.0 wt.%, respectively; the raw materials were uniformly mixed to obtain a mixture; the mixture was heated to 1620 °C, this temperature was kept for 2.5 h, and the mixture was molten into slag; wherein the aluminium nitride, aluminium carbide, and metallic aluminium in the aluminium ash slag reduce the valuable metals in the slag into an alloy, and the slag is utilized for the aluminate-based inorganic non-metallic material in a high-value mode.

**Example 15**

The waste incineration fly ash and the aluminium ash slag were recycled to prepare an aluminate-based inorganic non-metallic material with dodecacalcium heptaluminate ($Ca_{12}Al_{14}O_{33}$) as a main mineral phase. The multi-source solid waste composition data (see Table 1) were collected; a $CaO$-$SiO_2$-$Al_2O_3$ phase diagram containing a dodecacalcium heptaluminate phase was selected, a composition range of the dodecacalcium heptaluminate was read from the phase diagram, a content of the impurity $MgO$ was limited, and the contents of $CaO$, $SiO_2$, $Al_2O_3$ and $MgO$ were determined as 38.0-48.0 wt.%, 0-10.0 wt.%, 42.0-52.0 wt.% and 0-10.0 wt.%, respectively; and the composition data of the waste incineration fly ash and the aluminium ash slag and the composition data of the dodecacalcium heptaluminate phase were substituted into a composition calculation matrix:

$$\begin{bmatrix} P_{waste\ incineration\ fly\ ash} & P_{aluminium\ ash\ slag} \end{bmatrix} \begin{bmatrix} 1 & 0.463 & 0.084 & 0.018 & 0.027 \\ 1 & 0.015 & 0.046 & 0.793 & 0.057 \end{bmatrix} \frac{1}{P_{waste\ incineration\ fly\ ash} * 0.592 + P_{aluminium\ ash\ slag} * 0.911}$$

$$= \begin{bmatrix} P_{waste\ incineration\ fly\ ash} * 0.592 + P_{aluminium\ ash\ slag} * 0.911 & 0.380{\sim}0.480 & 0{\sim}0.100 & 0.420{\sim}0.520 & 0{\sim}0.100 \end{bmatrix}$$

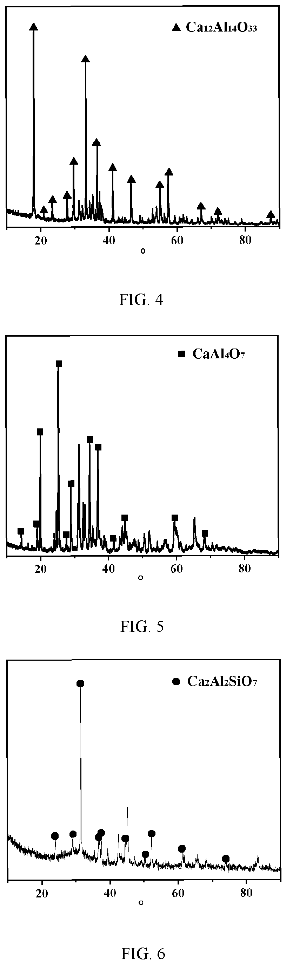

The matrix was solved to obtain the addition amounts of the waste incineration fly ash and the aluminium ash slag, that is, $P_{waste\ incineration\ fly\ ash}$ and $P_{aluminium\ ash\ slag}$ are 62.0 wt.% and 38.0 wt.%, respectively; the raw materials were uniformly mixed to obtain a mixture; the mixture was heated to 1500 °C, this temperature was kept for 3.0 h, and the mixture was molten into slag; wherein the aluminium nitride, aluminium carbide, and metallic aluminium in the aluminium ash slag reduce the valuable metals in the slag into an alloy, and the slag is utilized for the aluminate-based inorganic non-metallic material in a high-value mode; the obtained alloy is an iron-zinc alloy, and the iron content and the zinc content are 86.0 wt.% and 14.0 wt.%, respectively; FIG. 4 is an XRD pattern of the obtained aluminate-based inorganic non-metallic material with a main crystal phase of dodecacalcium heptaluminate ($Ca_{12}Al_{14}O_{33}$) and a main crystal phase content of 92.0 wt.%.

**Example 16**

The waste incineration fly ash and the aluminium ash slag were recycled to prepare an aluminate-based inorganic non-metallic material with dodecacalcium heptaluminate ($Ca_{12}Al_{14}O_{33}$) as a main mineral phase. The multi-source solid waste composition data (see Table 1) were collected; a $CaO$-$SiO_2$-$Al_2O_3$ phase diagram containing a dodecacalcium heptaluminate phase was selected, a composition range of the dodecacalcium heptaluminate was read from the phase diagram, a content of the impurity $MgO$ was limited, and the contents of $CaO$, $SiO_2$, $Al_2O_3$ and $MgO$ were determined as 38.0-48.0 wt.%, 0-10.0 wt.%, 42.0-52.0 wt.% and 0-10.0 wt.%, respectively; and the composition data of the waste incineration fly ash and the aluminium ash slag and the composition data of the dodecacalcium heptaluminate phase were substituted into a composition calculation matrix:

$$\begin{bmatrix} P_{waste\ incineration\ fly\ ash} & P_{aluminium\ ash\ slag} \end{bmatrix} \begin{bmatrix} 1 & 0.463 & 0.084 & 0.018 & 0.027 \\ 1 & 0.015 & 0.046 & 0.793 & 0.057 \end{bmatrix} \frac{1}{P_{waste\ incineration\ fly\ ash} * 0.592 + P_{aluminium\ ash\ slag} * 0.911}$$

$$= \begin{bmatrix} P_{waste\ incineration\ fly\ ash} * 0.592 + P_{aluminium\ ash\ slag} * 0.911 & 0.380{\sim}0.480 & 0{\sim}0.100 & 0.420{\sim}0.520 & 0{\sim}0.100 \end{bmatrix}$$

The matrix was solved to obtain the addition amounts of the waste incineration fly ash and the aluminium ash slag,

that is, $P_{\text{waste incineration fly ash}}$ and $P_{\text{aluminium ash slag}}$ are 61.0 wt.% and 39.0 wt.%, respectively; the raw materials were uniformly mixed to obtain a mixture; the mixture was heated to 1460 °C, this temperature was kept for 2.0 h, and the mixture was molten into slag; wherein the aluminium nitride, aluminium carbide, and metallic aluminium in the aluminium ash slag reduce the valuable metals in the slag into an alloy, and the slag is utilized for the aluminate-based inorganic non-metallic material in a high-value mode.

**Example 17**

The phosphogypsum and the aluminium ash slag were recycled to prepare an aluminate-based inorganic non-metallic material with calcium dialuminate ($CaAl_4O_7$) as a main mineral phase. The multi-source solid waste composition data (see Table 1) were collected; a $CaO$-$SiO_2$-$Al_2O_3$ phase diagram containing a calcium dialuminate phase was selected, a composition range of the calcium dialuminate was read from the phase diagram, a content of the impurity MgO was limited, and the contents of CaO, $SiO_2$, $Al_2O_3$ and MgO were determined as 12.0-22.0 wt.%, 0-10.0 wt.%, 68.0-78.0 wt.% and 0-10.0 wt.%, respectively; and the composition data of the phosphogypsum and the aluminium ash slag and the composition data of the calcium dialuminate were substituted into a composition calculation matrix:

$$\begin{bmatrix} P_{\text{phosphogypsum}} & P_{\text{aluminium} \atop \text{ash slag}} \end{bmatrix} \begin{bmatrix} 1 & 0.378 & 0.083 & 0.009 & 0.001 \\ 1 & 0.015 & 0.046 & 0.793 & 0.057 \end{bmatrix} \frac{1}{P_{\text{phosphogypsum}} * 0.471 + P_{\text{aluminium} \atop \text{ash slag}} * 0.911}$$

$$= \begin{bmatrix} P_{\text{phosphogypsum}} * 0.471 + P_{\text{aluminium} \atop \text{ash slag}} * 0.911 & 0.120\sim0.220 & 0\sim0.100 & 0.680\sim0.780 & 0\sim0.100 \end{bmatrix}$$

The matrix was solved to obtain the addition amounts of the phosphogypsum and the aluminium ash slag, that is, $P_{\text{phosphogypsum}}$ and $P_{\text{aluminium ash slag}}$ are 31.0 wt.% and 69.0 wt.%, respectively; the raw materials were uniformly mixed to obtain a mixture; the mixture was heated to 1700 °C, this temperature was kept for 3.0 h, and the mixture was molten into slag; wherein the aluminium nitride, aluminium carbide, and metallic aluminium in the aluminium ash slag reduce the valuable metals in the slag into an alloy, and the slag is utilized for the aluminate-based inorganic non-metallic material in a high-value mode; the obtained alloy is an iron-zinc-copper alloy, and the iron content, the zinc content and the copper content are 84.0 wt.%, 10.0 wt.% and 6.0 wt.%, respectively; FIG. 5 is an XRD pattern of the obtained aluminate-based inorganic non-metallic material with a main crystal phase of calcium dialuminate ($CaAl_4O_7$) and a main crystal phase content of 85.0 wt.%.

**Example 18**

The phosphogypsum and the aluminium ash slag were recycled to prepare an aluminate-based inorganic non-metallic material with calcium dialuminate ($CaAl_4O_7$) as a main mineral phase. The multi-source solid waste composition data (see Table 1) were collected; a $CaO$-$SiO_2$-$Al_2O_3$ phase diagram containing a calcium dialuminate phase was selected, a composition range of the calcium dialuminate was read from the phase diagram, a content of the impurity MgO was limited, and the contents of CaO, $SiO_2$, $Al_2O_3$ and MgO were determined as 12.0-22.0 wt.%, 0-10.0 wt.%, 68.0-78.0 wt.% and 0-10.0 wt.%, respectively; and the composition data of the phosphogypsum and the aluminium ash slag and the composition data of the calcium dialuminate were substituted into a composition calculation matrix:

$$\begin{bmatrix} P_{\text{phosphogypsum}} & P_{\text{aluminium} \atop \text{ash slag}} \end{bmatrix} \begin{bmatrix} 1 & 0.378 & 0.083 & 0.009 & 0.001 \\ 1 & 0.015 & 0.046 & 0.793 & 0.057 \end{bmatrix} \frac{1}{P_{\text{phosphogypsum}} * 0.471 + P_{\text{aluminium} \atop \text{ash slag}} * 0.911}$$

$$= \begin{bmatrix} P_{\text{phosphogypsum}} * 0.471 + P_{\text{aluminium} \atop \text{ash slag}} * 0.911 & 0.120\sim0.220 & 0\sim0.100 & 0.680\sim0.780 & 0\sim0.100 \end{bmatrix}$$

The matrix was solved to obtain the addition amounts of the phosphogypsum and the aluminium ash slag, that is, $P_{\text{phosphogypsum}}$ and $P_{\text{aluminium ash slag}}$ are 33.0 wt.% and 67.0 wt.%, respectively; the raw materials were uniformly mixed to obtain a mixture; the mixture was heated to 1620 °C, this temperature was kept for 2.5 h, and the mixture was molten into slag; wherein the aluminium nitride, aluminium carbide, and metallic aluminium in the aluminium ash slag reduce the valuable metals in the slag into an alloy, and the slag is utilized for the aluminate-based inorganic non-metallic material in a high-value mode.

**Example 19**

The waste incineration fly ash and the aluminium ash slag were recycled to prepare an aluminate-based inorganic non-metallic material with calcium aluminate ($CaAl_2O_7$) as a main mineral phase. The multi-source solid waste composition data (see Table 1) were collected; a $CaO$-$SiO_2$-$Al_2O_3$ phase diagram containing a calcium aluminate phase was selected, a composition range of the calcium aluminate was read from the phase diagram, a content of the impurity MgO was limited, and the contents of CaO, $SiO_2$, $Al_2O_3$ and MgO were determined as 25.0-35.0 wt.%, 0-10.0 wt.%, 55.0-65.0 wt.% and 0-10.0 wt.%, respectively; and the composition data of the waste incineration fly ash and the aluminium ash slag and the composition data of the calcium aluminate were substituted into a composition calculation matrix:

$$\begin{bmatrix} P_{\substack{\text{waste} \\ \text{incineration} \\ \text{fly ash}}} & P_{\substack{\text{aluminium} \\ \text{ash slag}}} \end{bmatrix} \begin{bmatrix} 1 & 0.463 & 0.084 & 0.018 & 0.027 \\ 1 & 0.015 & 0.046 & 0.793 & 0.057 \end{bmatrix} \frac{1}{P_{\substack{\text{waste} \\ \text{incineration} \\ \text{fly ash}}} * 0.592 + P_{\substack{\text{aluminium} \\ \text{ash slag}}} * 0.911}$$

$$= \begin{bmatrix} P_{\substack{\text{waste} \\ \text{incineration} \\ \text{fly ash}}} * 0.592 + P_{\substack{\text{aluminium} \\ \text{ash slag}}} * 0.911 & 0.250\sim0.350 & 0\sim0.100 & 0.550\sim0.650 & 0\sim0.100 \end{bmatrix}$$

The matrix was solved to obtain the addition amounts of the waste incineration fly ash and the aluminium ash slag, that is, $P_{\text{waste incineration fly ash}}$ and $P_{\text{aluminium ash slag}}$ are 45.0 wt.% and 55.0 wt.%, respectively; the raw materials were uniformly mixed to obtain a mixture; the mixture was heated to 1600 °C, this temperature was kept for 3.0 h, and the mixture was molten into slag; wherein the aluminium nitride, aluminium carbide, and metallic aluminium in the aluminium ash slag reduce the valuable metals in the slag into an alloy, and the slag is utilized for the aluminate-based inorganic non-metallic material in a high-value mode.

**Example 20**

The waste incineration fly ash and the aluminium ash slag were recycled to prepare an aluminate-based inorganic non-metallic material with calcium aluminate ($CaAl_2O_7$) as a main mineral phase. The multi-source solid waste composition data (see Table 1) were collected; a $CaO$-$SiO_2$-$Al_2O_3$ phase diagram containing a calcium aluminate phase was selected, a composition range of the calcium aluminate was read from the phase diagram, a content of the impurity MgO was limited, and the contents of CaO, $SiO_2$, $Al_2O_3$ and MgO were determined as 25.0-35.0 wt.%, 0-10.0 wt.%, 55.0-65.0 wt.% and 0-10.0 wt.%, respectively; and the composition data of the waste incineration fly ash and the aluminium ash slag and the composition data of the calcium aluminate were substituted into a composition calculation matrix:

$$\begin{bmatrix} P_{\substack{\text{waste} \\ \text{incineration} \\ \text{fly ash}}} & P_{\substack{\text{aluminium} \\ \text{ash slag}}} \end{bmatrix} \begin{bmatrix} 1 & 0.463 & 0.084 & 0.018 & 0.027 \\ 1 & 0.015 & 0.046 & 0.793 & 0.057 \end{bmatrix} \frac{1}{P_{\substack{\text{waste} \\ \text{incineration} \\ \text{fly ash}}} * 0.592 + P_{\substack{\text{aluminium} \\ \text{ash slag}}} * 0.911}$$

$$= \begin{bmatrix} P_{\substack{\text{waste} \\ \text{incineration} \\ \text{fly ash}}} * 0.592 + P_{\substack{\text{aluminium} \\ \text{ash slag}}} * 0.911 & 0.250\sim0.350 & 0\sim0.100 & 0.550\sim0.650 & 0\sim0.100 \end{bmatrix}$$

The matrix was solved to obtain the addition amounts of the waste incineration fly ash and the aluminium ash slag, that is, $P_{\text{waste incineration fly ash}}$ and $P_{\text{aluminium ash slag}}$ are 46.0 wt.% and 54.0 wt.%, respectively; the raw materials were uniformly mixed to obtain a mixture; the mixture was heated to 1520 °C, this temperature was kept for 2.0 h, and the mixture was molten into slag; wherein the aluminium nitride, aluminium carbide, and metallic aluminium in the aluminium ash slag reduce the valuable metals in the slag into an alloy, and the slag is utilized for the aluminate-based inorganic non-metallic material in a high-value mode.

**Example 21**

The desulfurized gypsum, the magnesium slag, the electric furnace slag and the aluminium ash slag were recycled to prepare an aluminosilicate-based inorganic non-metallic material with gehlenite ($Ca_2Al_2SiO_7$) as a main mineral phase. The multi-source solid waste composition data (see Table 1) were collected; a $CaO$-$SiO_2$-$Al_2O_3$ phase

diagram containing a gehlenite phase was selected, a composition range of the gehlenite was read from the phase diagram, a content of the impurity MgO was limited, and the contents of CaO, $SiO_2$, $Al_2O_3$ and MgO were determined as 34.0-44.0 wt.%, 15.0-25.0 wt.%, 30.0-40.0 wt.% and 0-10.0 wt.%, respectively; and the composition data of the desulfurized gypsum, the magnesium slag, the electric furnace slag and the aluminium ash slag and the composition data of the gehlenite were substituted into a composition calculation matrix:

$$\left[ P_{\substack{desulfurized \\ gypsum}} \quad P_{\substack{magnesium \\ slag}} \quad P_{\substack{electric \\ furnace \\ slag}} \quad P_{\substack{aluminium \\ ash\,slag}} \right] \begin{bmatrix} 1 & 0.674 & 0.043 & 0.013 & 0.019 \\ 1 & 0.502 & 0.416 & 0.010 & 0.020 \\ 1 & 0.497 & 0.278 & 0.034 & 0.065 \\ 1 & 0.015 & 0.046 & 0.793 & 0.057 \end{bmatrix} \frac{1}{P_{\substack{desulfurized \\ gypsum}} * 0.749 + P_{\substack{magnesium \\ slag}} * 0.948 + P_{\substack{electric \\ furnace \\ slag}} * 0.874 + P_{\substack{aluminium \\ ash\,slag}} * 0.911}$$

$$= \left[ P_{\substack{desulfurized \\ gypsum}} * 0.749 + P_{\substack{magnesium \\ slag}} * 0.948 + P_{\substack{electric \\ furnace \\ slag}} * 0.874 + P_{\substack{aluminium \\ ash\,slag}} * 0.911 \quad 0.340\sim0.440 \quad 0.150\sim0.250 \quad 0.300\sim0.400 \quad 0\sim0.100 \right]$$

The matrix was solved to obtain the addition amounts of the desulfurized gypsum, the magnesium slag, the electric furnace slag and the aluminium ash slag, that is, $P_{desulfurized\ gypsum}$, $P_{magnesium\ slag}$, $P_{electric\ furnace\ slag}$ and $P_{aluminium\ ash\ slag}$ are 14.7 wt.%, 23.9 wt.%, 22.6 wt.% and 38.8 wt.%, respectively; the raw materials were uniformly mixed to obtain a mixture; the mixture was heated to 1400 °C, this temperature was kept for 3.0 h, and the mixture was molten into slag; wherein the aluminium nitride, aluminium carbide, and metallic aluminium in the aluminium ash slag reduce the valuable metals in the slag into an alloy, and the slag is utilized for the aluminosilicate-based inorganic non-metallic material in a high-value mode; the obtained alloy is iron-chromium-zinc alloy, and the iron content, the chromium content and the zinc content are 82.0 wt.%, 11.0 wt.% and 7.0 wt.%, respectively; FIG. 6 is an XRD pattern of the obtained aluminosilicate-based inorganic non-metallic material with a main crystal phase of gehlenite ($Ca_2Al_2SiO_7$) and a main crystal phase content of 89.0 wt.%.

**Example 22**

The desulfurized gypsum, the magnesium slag, the electric furnace slag and the aluminium ash slag were recycled to prepare an aluminosilicate-based inorganic non-metallic material with gehlenite ($Ca_2Al_2SiO_7$) as a main mineral phase. The multi-source solid waste composition data (see Table 1) were collected; a CaO-$SiO_2$-$Al_2O_3$ phase diagram containing a gehlenite phase was selected, a composition range of the gehlenite was read from the phase diagram, a content of the impurity MgO was limited, and the contents of CaO, $SiO_2$, $Al_2O_3$ and MgO were determined as 34.0-44.0 wt.%, 15.0-25.0 wt.%, 30.0-40.0 wt.% and 0-10.0 wt.%, respectively; and the composition data of the desulfurized gypsum, the magnesium slag, the electric furnace slag and the aluminium ash slag and the composition data of the gehlenite were substituted into a composition calculation matrix:

$$\left[ P_{\substack{desulfurized \\ gypsum}} \quad P_{\substack{magnesium \\ slag}} \quad P_{\substack{electric \\ furnace \\ slag}} \quad P_{\substack{aluminium \\ ash\,slag}} \right] \begin{bmatrix} 1 & 0.674 & 0.043 & 0.013 & 0.019 \\ 1 & 0.502 & 0.416 & 0.010 & 0.020 \\ 1 & 0.497 & 0.278 & 0.034 & 0.065 \\ 1 & 0.015 & 0.046 & 0.793 & 0.057 \end{bmatrix} \frac{1}{P_{\substack{desulfurized \\ gypsum}} * 0.749 + P_{\substack{magnesium \\ slag}} * 0.948 + P_{\substack{electric \\ furnace \\ slag}} * 0.874 + P_{\substack{aluminium \\ ash\,slag}} * 0.911}$$

$$= \left[ P_{\substack{desulfurized \\ gypsum}} * 0.749 + P_{\substack{magnesium \\ slag}} * 0.948 + P_{\substack{electric \\ furnace \\ slag}} * 0.874 + P_{\substack{aluminium \\ ash\,slag}} * 0.911 \quad 0.340\sim0.440 \quad 0.150\sim0.250 \quad 0.300\sim0.400 \quad 0\sim0.100 \right]$$

The matrix was solved to obtain the addition amounts of the desulfurized gypsum, the magnesium slag, the electric furnace slag and the aluminium ash slag, that is, $P_{desulfurized\ gypsum}$, $P_{magnesium\ slag}$, $P_{electric\ furnace\ slag}$ and $P_{aluminium\ ash\ slag}$ are 21.4 wt.%, 36.5 wt.%, 2.6 wt.% and 39.5 wt.%, respectively; the raw materials were uniformly mixed to obtain a mixture; the mixture was heated to 1300 °C, this temperature was kept for 2.5 h, and the mixture was molten into slag; wherein the aluminium nitride, aluminium carbide, and metallic aluminium in the aluminium ash slag reduce the valuable metals in the slag into an alloy, and the slag is utilized for the aluminosilicate-based inorganic non-metallic material in a high-value mode.

**Example 23**

The iron tailings, the magnesium slag, the electric furnace slag and the aluminium ash slag were recycled to prepare an aluminosilicate-based inorganic non-metallic material with anorthite ($CaAl_2Si_2O_8$) as a main mineral phase. The multi-source solid waste composition data (see Table 1) were collected; a CaO-$SiO_2$-$Al_2O_3$ phase diagram containing an anorthite phase was selected, a composition range of the anorthite was read from the phase diagram, a content of the impurity MgO was limited, and the contents of CaO, $SiO_2$, $Al_2O_3$ and MgO were determined as 13.0-23.0 wt.%, 36.0-46.0 wt.%, 30.0-40.0 wt.% and 0-10.0 wt.%, respectively; and the composition data of the iron tailings, the magnesium slag, the electric furnace slag and the aluminium ash slag and the composition data of the anorthite were substituted into a composition calculation matrix:

$$\begin{bmatrix} P_{\text{iron tailings}} & P_{\text{magnesium slag}} & P_{\text{electric furnace slag}} & P_{\text{aluminium ash slag}} \end{bmatrix} \begin{bmatrix} 1 & 0.032 & 0.633 & 0.150 & 0.043 \\ 1 & 0.502 & 0.416 & 0.010 & 0.020 \\ 1 & 0.497 & 0.278 & 0.034 & 0.065 \\ 1 & 0.015 & 0.046 & 0.793 & 0.057 \end{bmatrix} \frac{1}{P_{\text{iron tailings}} * 0.858 + P_{\text{magnesium slag}} * 0.948 + P_{\text{electric furnace slag}} * 0.874 + P_{\text{aluminium ash slag}} * 0.911}$$

$$= \begin{bmatrix} P_{\text{iron tailings}} * 0.858 + P_{\text{magnesium slag}} * 0.948 + P_{\text{electric furnace slag}} * 0.874 + P_{\text{aluminium ash slag}} * 0.911 & 0.130\sim0.230 & 0.360\sim0.460 & 0.300\sim0.400 & 0\sim0.100 \end{bmatrix}$$

The matrix was solved to obtain the addition amounts of the iron tailings, the magnesium slag, the electric furnace slag and the aluminium ash slag, that is, $P_{\text{iron tailings}}$, $P_{\text{magnesium slag}}$, $P_{\text{electric furnace slag}}$ and $P_{\text{aluminium ash slag}}$ are 38.5 wt.%, 20.3 wt.%, 8.4 wt.% and 32.8 wt.%, respectively; the raw materials were uniformly mixed to obtain a mixture; the mixture was heated to 1450 °C, this temperature was kept for 2.0 h, and the mixture was molten into slag; wherein the aluminium nitride, aluminium carbide, and metallic aluminium in the aluminium ash slag reduce the valuable metals in the slag into an alloy, and the slag is utilized for the aluminosilicate-based inorganic non-metallic material in a high-value mode.

## Example 24

The iron tailings, the magnesium slag, the electric furnace slag and the aluminium ash slag were recycled to prepare an aluminosilicate-based inorganic non-metallic material with anorthite ($CaAl_2Si_2O_8$) as a main mineral phase. The multi-source solid waste composition data (see Table 1) were collected; a $CaO$-$SiO_2$-$Al_2O_3$ phase diagram containing an anorthite phase was selected, a composition range of the anorthite was read from the phase diagram, a content of the impurity MgO was limited, and the contents of $CaO$, $SiO_2$, $Al_2O_3$ and MgO were determined as 13.0-23.0 wt.%, 36.0-46.0 wt.%, 30.0-40.0 wt.% and 0-10.0 wt.%, respectively; and the composition data of the iron tailings, the magnesium slag, the electric furnace slag and the aluminium ash slag and the composition data of the anorthite were substituted into a composition calculation matrix:

$$\begin{bmatrix} P_{\text{iron tailings}} & P_{\text{magnesium slag}} & P_{\text{electric furnace slag}} & P_{\text{aluminium ash slag}} \end{bmatrix} \begin{bmatrix} 1 & 0.032 & 0.633 & 0.150 & 0.043 \\ 1 & 0.502 & 0.416 & 0.010 & 0.020 \\ 1 & 0.497 & 0.278 & 0.034 & 0.065 \\ 1 & 0.015 & 0.046 & 0.793 & 0.057 \end{bmatrix} \frac{1}{P_{\text{iron tailings}} * 0.858 + P_{\text{magnesium slag}} * 0.948 + P_{\text{electric furnace slag}} * 0.874 + P_{\text{aluminium ash slag}} * 0.911}$$

$$= \begin{bmatrix} P_{\text{iron tailings}} * 0.858 + P_{\text{magnesium slag}} * 0.948 + P_{\text{electric furnace slag}} * 0.874 + P_{\text{aluminium ash slag}} * 0.911 & 0.130\sim0.230 & 0.360\sim0.460 & 0.300\sim0.400 & 0\sim0.100 \end{bmatrix}$$

The matrix was solved to obtain the addition amounts of the iron tailings, the magnesium slag, the electric furnace slag and the aluminium ash slag, that is, $P_{\text{iron tailings}}$, $P_{\text{magnesium slag}}$, $P_{\text{electric furnace slag}}$ and $P_{\text{aluminium ash slag}}$ are 42.1 wt.%, 1.4 wt.%, 26.9 wt.% and 29.6 wt.%, respectively; the raw materials were uniformly mixed to obtain a mixture; the mixture was heated to 1410 °C, this temperature was kept for 1.0 h, and the mixture was molten into slag; wherein the aluminium nitride, aluminium carbide, and metallic aluminium in the aluminium ash slag reduce the valuable metals in the slag into an alloy, and the slag is utilized for the aluminosilicate-based inorganic non-metallic material in a high-value mode.

## Example 25

The iron tailings, the fly ash and the aluminium ash slag were recycled to prepare an aluminosilicate-based inorganic non-metallic material with mullite ($Al_6Si_2O_{13}$) as a main mineral phase. The multi-source solid waste composition data (see Table 1) were collected; a $CaO$-$SiO_2$-$Al_2O_3$ phase diagram containing a mullite phase was selected, a composition range of the mullite was read from the phase diagram, a content of the impurity MgO was limited, and the contents of $CaO$, $SiO_2$, $Al_2O_3$ and MgO were determined as 0-10.0 wt.%, 18.0-28.0 wt.%, 62.0-72.0 wt.% and 0-10.0 wt.%, respectively; and the composition data of the iron tailings, the fly ash and the aluminium ash slag and the composition data of the mullite were substituted into a composition calculation matrix:

$$\begin{bmatrix} P_{\text{iron tailings}} & P_{\text{fly ash}} & P_{\text{aluminium ash slag}} \end{bmatrix} \begin{bmatrix} 1 & 0.032 & 0.633 & 0.150 & 0.043 \\ 1 & 0.101 & 0.540 & 0.184 & 0.011 \\ 1 & 0.015 & 0.046 & 0.793 & 0.057 \end{bmatrix} \frac{1}{P_{\text{iron tailings}} * 0.858 + P_{\text{fly ash}} * 0.836 + P_{\text{aluminium ash slag}} * 0.911}$$

$$= \begin{bmatrix} P_{\text{iron tailings}} * 0.858 + P_{\text{fly ash}} * 0.836 + P_{\text{aluminium ash slag}} * 0.911 & 0\sim 0.100 & 0.180\sim 0.280 & 0.620\sim 0.720 & 0\sim 0.100 \end{bmatrix}$$

The matrix was solved to obtain the addition amounts of the iron tailings, the fly ash and the aluminium ash slag, that is, $P_{\text{iron tailings}}$, $P_{\text{fly ash}}$ and $P_{\text{aluminium ash slag}}$ are 21.8 wt.%, 8.2 wt.% and 70.0 wt.%, respectively; the raw materials were uniformly mixed to obtain a mixture; the mixture was heated to 1800 °C, this temperature was kept for 1.5 h, and the mixture was molten into slag; wherein the aluminium nitride, aluminium carbide, and metallic aluminium in the aluminium ash slag reduce the valuable metals in the slag into an alloy, and the slag is utilized for the aluminosilicate-based inorganic non-metallic material in a high-value mode.

**Example 26**

The aluminium ash slag and the industrial magnesium oxide were recycled to prepare a magnesioaluminate-based inorganic non-metallic material with magnesioaluminate spinel ($MgAl_2O_4$) as a main mineral phase. The multi-source solid waste composition data (see Table 1) were collected; a $CaO$-$Al_2O_3$-$MgO$ phase diagram containing a magnesioaluminate spinel phase was selected, a composition range of the magnesioaluminate spinel was read from the phase diagram, a content of the impurity $SiO_2$ was limited, and the contents of $CaO$, $SiO_2$, $Al_2O_3$ and $MgO$ were determined as 0-10.0 wt.%, 0-10.0 wt.%, 62.0-72.0 wt.% and 18.0-28.0 wt.%, respectively; and the composition data of the aluminium ash slag and the industrial magnesium oxide and the composition data of the magnesioaluminate spinel were substituted into a composition calculation matrix:

$$\begin{bmatrix} P_{\text{aluminium ash slag}} & P_{\text{industrial magnesium oxide}} \end{bmatrix} \begin{bmatrix} 1 & 0.015 & 0.046 & 0.793 & 0.057 \\ 1 & 0 & 0 & 0 & 1.00 \end{bmatrix} \frac{1}{P_{\text{aluminium ash slag}} * 0.911 + P_{\text{industrial magnesium oxide}} * 1.00}$$

$$= \begin{bmatrix} P_{\text{aluminium ash slag}} * 0.911 + P_{\text{industrial magnesium oxide}} * 1.00 & 0\sim 0.100 & 0\sim 0.100 & 0.620\sim 0.720 & 0.180\sim 0.280 \end{bmatrix}$$

The matrix was solved to obtain the addition amounts of the aluminium ash slag and the industrial magnesium oxide, that is, $P_{\text{aluminium ash slag}}$ and $P_{\text{industrial magnesium oxide}}$ are 79.0 wt.% and 21.0 wt.%, respectively; the raw materials were uniformly mixed to obtain a mixture; the mixture was heated to 1800 °C, this temperature was kept for 3.0 h, and the mixture was molten into slag; wherein the aluminium nitride, aluminium carbide, and metallic aluminium in the aluminium ash slag reduce the valuable metals in the slag into an alloy, and the slag is utilized for the magnesioaluminate-based inorganic non-metallic material in a high-value mode.

**Comparative Example 1**

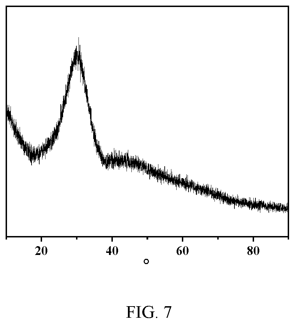

The aluminium ash slag was used for reducing the valuable metals in the waste incineration fly ash into an alloy. The contents of valuable metals iron and zinc in the aluminium ash slag are 3.9 wt.% and 1.0 wt.%, respectively, and the contents of valuable metals iron and zinc in the waste incineration fly ash are 1.3 wt.% and 0.6 wt.%, respectively. The reducing agent in the aluminium ash slag includes aluminium nitride, aluminium carbide and metallic aluminium, wherein the aluminium carbide and the metallic aluminium are converted into the aluminium nitride due to low content, and the total content of the converted aluminium nitride is 30.0 wt.%. According to the reduction reaction equation (formula 3) described in the summary of the present invention, the addition amounts of the aluminium ash slag and the waste incineration fly ash were determined as 5.0 wt.% and 95.0 wt.%, respectively; the raw materials were uniformly mixed to obtain a mixture; the mixture was heated to 1500 °C, this temperature was kept for 3.0 h, and the mixture was molten into slag; wherein the aluminium nitride, aluminium carbide, and metallic aluminium in the aluminium ash slag reduce the valuable metals in the slag into iron-zinc alloy, and the reduction rates of iron and zinc are 91% and 95% respectively; the slag is in an amorphous state because a composition of the slag is different from that of the existing mineral phase with an XRD pattern shown in FIG. 7, consequently, the slag is difficult to be recycled.

**Comparative Example 2**

The aluminium ash slag was used for reducing the valuable metals in the phosphogypsum into an alloy. The contents of valuable metals iron, zinc and copper in the aluminium ash slag are 3.9 wt.%, 1.0 wt.% and 0, respectively, and the contents of valuable metals iron, zinc and copper in the phosphogypsum are 1.2 wt.%, 0.6 wt.% and 0.5 wt.%, respectively. The reducing agent in the aluminium ash slag includes aluminium nitride, aluminium carbide and metallic aluminium, wherein the aluminium carbide and the metallic aluminium are converted into the aluminium nitride due to low content, and the total content of the converted aluminium nitride is 30.0 wt.%. According to the reduction reaction equation (formula 3) described in the summary of the present invention, the addition amounts of the aluminium ash slag and the phosphogypsum were determined as 7.0 wt.% and 93.0 wt.%, respectively; the raw materials were uniformly mixed to obtain a mixture; the mixture was heated to 1550 °C, this temperature was kept for 3.0 h, and the mixture was molten into slag; wherein the aluminium nitride, aluminium carbide, and metallic aluminium in the aluminium ash slag reduce the valuable metals in the slag into iron-zinc-copper alloy, and the reduction rates of iron, zinc and copper are 90%, 94% and 92%, respectively; the slag is in an amorphous state because a composition of the slag is different from that of the existing mineral phase, consequently, the slag is difficult to be recycled.

**Comparative Example 3**

The aluminium ash slag was used for reducing the valuable metals in the electric furnace slag into an alloy. The contents of valuable metals iron, chromium and zinc in the aluminium ash slag are 3.9 wt.%, 1.0 wt.% and 0, respectively, and the contents of valuable metals iron, chromium and zinc in the electric furnace slag are 0.7 wt.%, 4.5 wt.% and 0.3 wt.%, respectively. The reducing agent in the aluminium ash slag includes aluminium nitride, aluminium carbide and metallic aluminium, wherein the aluminium carbide and the metallic aluminium are converted into the aluminium nitride due to low content, and the total content of the converted aluminium nitride is 30.0 wt.%. According to the reduction reaction equation (formula 3) described in the summary of the present invention, the addition amounts of the aluminium ash slag and the electric furnace slag were determined as 10.0 wt.% and 90.0 wt.%, respectively; the raw materials were uniformly mixed to obtain a mixture; the mixture was heated to 1600 °C, this temperature was kept for 3.0 h, and the mixture was molten into slag; wherein the aluminium nitride, aluminium carbide, and metallic aluminium in the aluminium ash slag reduce the valuable metals in the slag into iron-chromium-zinc alloy, and the reduction rates of iron, chromium and zinc are 93%, 90% and 95% respectively; the slag is in an amorphous state because a composition of the slag is different from that of the existing mineral phase, consequently, the slag is difficult to be recycled.

The foregoing descriptions are merely specific implementations of the present invention, but are not intended to limit the protection scope of the present invention. Any equivalent modification or replacement readily figured out by those skilled in the art within a technical scope disclosed in the present invention should fall within the protection scope of the present invention. Therefore, the protection scope of the present invention shall be subject to the protection scope determined by the claims.

**Claims**

1. A multi-source solid waste recycling method based on composition design for calcium-silicon-aluminium-magnesium oxide, **characterized in that**, the method comprises the following steps: collecting multi-source solid waste composition data; calculating and designing compositions of calcium oxide, silicon oxide, aluminium oxide and magnesium oxide units to obtain an inorganic non-metallic raw material with a target composition; and melting the raw material into slag, wherein a reducing agent in the multi-source solid waste reduces valuable metals in the slag to obtain an alloy, thereby achieving recovery of the valuable metals, and the slag is used for the inorganic non-metallic material in a high-value mode.

2. The multi-source solid waste recycling method based on composition design for calcium-silicon-aluminium-magnesium oxide according to claim 1, **characterized in that**, a calculation method for a composition matrix of the calcium oxide, silicon oxide, aluminium oxide and magnesium oxide units is as follows:

$$\begin{bmatrix} P_1 & P_2 & \dots & P_n \end{bmatrix} \begin{bmatrix} 1 & Q_{1-CaO} & Q_{1-SiO2} & Q_{1-Al2O3} & Q_{1-MgO} \\ 1 & Q_{2-CaO} & Q_{2-SiO2} & Q_{2-Al2O3} & Q_{2-MgO} \\ \vdots & \vdots & \vdots & \vdots & \vdots \\ 1 & Q_{n-CaO} & Q_{n-SiO2} & Q_{n-Al2O3} & Q_{n-MgO} \end{bmatrix} * \frac{1}{\sum_{i=1}^{n} P_i * G_i}$$

$$= \begin{bmatrix} \sum_{i=1}^{n} P_i * G_i & \alpha & \beta & \gamma & \delta \end{bmatrix}$$

wherein $P_n$ is an addition amount of an $n^{th}$ solid waste;

$Q_{n-CaO}$ is a content of CaO in the $n^{th}$ solid waste;
$Q_{n-SiO2}$ is a content of $SiO_2$ in the $n^{th}$ solid waste;
$Q_{n-Al2O3}$ is a content of $Al_2O_3$ in the $n^{th}$ solid waste;
$Q_{n-MgO}$ is a content of MgO in the $n^{th}$ solid waste;
$G_i$ is a total content of CaO, $SiO_2$, $Al_2O_3$ and MgO in an $i^{th}$ solid waste;
$\alpha$ is a content of CaO in a target mineral phase composition region;
$\beta$ is a content of $SiO_2$ in the target mineral phase composition region;
$\gamma$ is a content of $Al_2O_3$ in a target mineral phase composition region;
$\delta$ is a content of MgO in a target mineral phase composition region; and
a sum of $\alpha$, $\beta$, $\gamma$, and $\delta$ is 1;
wherein the addition amount and content refer to weight percentage.

3. The multi-source solid waste recycling method based on composition design for calcium-silicon-aluminium-magnesium oxide according to claim 1, **characterized in that**, the slag provides a high-temperature homogeneous reaction environment, serves as a "solvent" for reactants, and converts reduction reactions from solid/solid and solid/liquid heterogeneous reactions into homogeneous reactions.

4. The multi-source solid waste recycling method based on composition design for calcium-silicon-aluminium-magnesium oxide according to claim 1, **characterized in that**, the reducing agent in the multi-source solid waste is selected from at least one of carbon, metallic aluminium, aluminium nitride, aluminium carbide, silicon nitride, and silicon carbide.

5. The multi-source solid waste recycling method based on composition design for calcium-silicon-aluminium-magnesium oxide according to claim 1, **characterized in that**, the inorganic non-metallic material is selected from one of a silicate-based inorganic non-metallic material, an aluminate-based inorganic non-metallic material, an aluminosilicate-based inorganic non-metallic material, and a magnesioaluminate-based inorganic non-metallic material.

6. The multi-source solid waste recycling method based on composition design for calcium-silicon-aluminium-magnesium oxide according to claim 1, **characterized in that**, the method specifically comprises:

S1. Data collection: collecting multi-source solid waste composition data, namely determining contents of CaO, $SiO_2$, $Al_2O_3$ and MgO in the multi-source solid waste;
S2. Determination of a target mineral phase composition and a solid waste raw material: determining a main mineral phase in the inorganic non-metallic material for which the slag is used in a high-value mode, determining a target mineral phase composition region according to CaO-$SiO_2$-$Al_2O_3$, CaO-$SiO_2$-MgO, CaO-$Al_2O_3$-MgO, and $SiO_2$-$Al_2O_3$-MgO ternary phase diagrams, namely (weight percentage) ranges of CaO, $SiO_2$, $Al_2O_3$ and MgO, and selecting two or more solid wastes or industrial raw materials as raw materials;
S3. Composition calculation and design: substituting the composition data of the selected solid wastes and the target mineral phase composition data into a composition calculation matrix, solving the matrix to obtain addition amounts of the selected solid wastes, and uniformly blending to obtain an inorganic non-metallic raw material with a target composition;
S4. Melting: heating the raw material to 1300-1800 °C, and then keeping the temperature for 1.0-3.0 h to melt the raw material into slag;
S5. Reduction: the slag provides a high-temperature homogeneous reaction environment and serves as a "solvent" for reactants, and the reducing agents reduce valuable metals in the slag to obtain an alloy;
S6. Separation of slag and alloy: the alloy is settled to a bottom of the slag and separated from the slag because a density of the alloy is greater than that of the slag; and

S7. High-value utilization of slag: the slag is separately used for a silicate-based inorganic non-metallic material, an aluminate-based inorganic non-metallic material, an aluminosilicate-based inorganic non-metallic material, and a magnesioaluminate-based inorganic non-metallic material in a high-value mode according to the target mineral phase composition.

Multi-source solid waste

↓

Composition calculation

↓

Designing

↓

Melting

↓

Separation of slag and alloy → Alloy

Silicate slag    Aluminate slag    Aluminosilicate slag    Magnesioaluminate slag

High-value utilization

Silicate-based inorganic non-metallic material    Aluminate-based inorganic non-metallic material    Aluminosilicate-based inorganic non-metallic material    Magnesioaluminate-based inorganic non-metallic material

FIG. 1

FIG. 2

FIG. 3

FIG. 4

FIG. 5

FIG. 6

FIG. 7

Europäisches
Patentamt

European
Patent Office

Office européen
des brevets

# EUROPEAN SEARCH REPORT

Application Number

EP 23 20 7658

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 111 889 487 A (UNIV TIANJIN) 6 November 2020 (2020-11-06) * claim 1 to 6 * * example 1 and 2 * ----- | 1-6 | INV. C22B5/04 B09B3/70 C01B33/20 C22B7/00 |
| Y | CN 111 139 358 A (UNIV BEIJING SCIENCE & TECH) 12 May 2020 (2020-05-12) * claim 1 to 10 * * figure 1 * ----- | 1-6 | C22B7/04 F23G5/44 G06F17/16 |
| A | CN 113 609 748 A (XINJIANG TIANYE GROUP CO LTD; UNIV HUAZHONG SCIENCE TECH) 5 November 2021 (2021-11-05) * the whole document * ----- | 1-6 | |
| A | CN 113 118 181 A (EVERBRIGHT ENVIRONMENTAL PROTECTION TECHNOLOGY INSTITUTE SHENZHEN LTD) 16 July 2021 (2021-07-16) * the whole document * ----- | 1-6 | |
| A | CN 112 011 696 A (UNIV BEIJING SCIENCE & TECH) 1 December 2020 (2020-12-01) * the whole document * ----- | 1-6 | TECHNICAL FIELDS SEARCHED (IPC) C22B B09C |
| A | CN 115 121 590 A (CHONGQING NEW ION ENVIRONMENTAL TECH CO LTD) 30 September 2022 (2022-09-30) * the whole document * ----- | 1-6 | C01B G06F B09B F23G |
| A | CA 2 258 147 A1 (FENICEM MINERALS INC [CA]) 24 December 1997 (1997-12-24) * the whole document * ----- | 1-6 | |
| A | CN 112 934 920 B (ZHEJIANG HEHUI ECOLOGICAL ENVIRONMENT TECH CO LTD ET AL.) 15 April 2022 (2022-04-15) * the whole document * ----- | 1-6 | |

The present search report has been drawn up for all claims

| Place of search | Date of completion of the search | Examiner |
|---|---|---|
| The Hague | 28 May 2024 | Martinez Miró, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 7658

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2024

| Patent document cited in search report | | Publication date | Patent family member(s) | | Publication date |
|---|---|---|---|---|---|
| CN 111889487 | A | 06-11-2020 | NONE | | |
| CN 111139358 | A | 12-05-2020 | NONE | | |
| CN 113609748 | A | 05-11-2021 | NONE | | |
| CN 113118181 | A | 16-07-2021 | NONE | | |
| CN 112011696 | A | 01-12-2020 | CN | 112011696 A | 01-12-2020 |
| | | | EP | 3971310 A1 | 23-03-2022 |
| | | | JP | 7109835 B1 | 01-08-2022 |
| | | | JP | 2022536819 A | 19-08-2022 |
| | | | RU | 2770396 C1 | 15-04-2022 |
| | | | WO | 2022001103 A1 | 06-01-2022 |
| | | | ZA | 202105069 B | 25-08-2021 |
| CN 115121590 | A | 30-09-2022 | NONE | | |
| CA 2258147 | A1 | 24-12-1997 | AU | 717488 B2 | 30-03-2000 |
| | | | CA | 2258147 A1 | 24-12-1997 |
| | | | US | 5865872 A | 02-02-1999 |
| | | | WO | 9748826 A1 | 24-12-1997 |
| CN 112934920 | B | 15-04-2022 | NONE | | |

EPO FORM P0459

For more details about this annex : see Official Journal of the European Patent Office, No. 12/82

**REFERENCES CITED IN THE DESCRIPTION**

**Patent documents cited in the description**

- CN 114671633 A
- CN 115477502 A
- CN 106630640 A
- CN 112958584 A
- CN 111995436 A